(19) Europäisches Patentamt
European Patent Office
Office européen des brevets

(11) **EP 4 116 823 A1**

(12) **EUROPEAN PATENT APPLICATION**
published in accordance with Art. 153(4) EPC

(43) Date of publication:
**11.01.2023 Bulletin 2023/02**

(21) Application number: **21781060.5**

(22) Date of filing: **04.03.2021**

(51) International Patent Classification (IPC):
***G06F 9/451*** *(2018.01)*

(86) International application number:
**PCT/CN2021/079054**

(87) International publication number:
**WO 2021/196968 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020 CN 202010245395**

(71) Applicant: **Huawei Technologies Co., Ltd.**
**Shenzhen, Guangdong 518129, (CN)**

(72) Inventors:
• **SUI, Zhicheng**
**Shenzhen, Guangdong 518129 (CN)**
• **ZHOU, Li**
**Shenzhen, Guangdong 518129 (CN)**
• **DANG, Maochang**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **METHOD AND APPARATUS FOR DISTRIBUTED PROCESSING OF UX ELEMENT**

(57)    This application provides a method and apparatus for distributed processing of a UX element, and pertains to the field of terminal artificial intelligence. The method includes: obtaining UX capability information of at least two terminal devices, where the UX capability information is used to indicate a UX capability corresponding to each of interaction manners supported by the terminal device; receiving a target task request, where the target task includes UX requirement information of at least two UX elements, and the UX requirement information is used to indicate a UX capability requirement corresponding to each of interaction manners that support the UX element in achieving a service objective; determining, based on the UX capability information of the at least two terminal devices and the UX requirement information of the at least two UX elements, a UX element that needs to be processed by each of the at least two terminal devices; and providing, for each of the at least two terminal devices, the UX element that needs to be processed by each of the at least two terminal devices. According to technical solutions in this application, distributed processing performed by a plurality of terminal devices on a plurality of UX elements can be determined and achieved, thereby improving a user experience.

FIG. 4

**Description**

This application claims priority to Chinese Patent Application No. 202010245395.7, filed with the China National Intellectual Property Administration on March 31, 2020 and entitled "METHOD AND APPARATUS FOR DISTRIBUTED PROCESSING OF UX ELEMENT", which is incorporated herein by reference in its entirety.

**TECHNICAL FIELD**

This application pertains to the field of terminal devices, and in particular, to a method and apparatus for distributed processing of a UX element.

**BACKGROUND**

With development of communication and computer application technologies, forms of terminal devices become diversified. When terminal devices in different forms exchange information with a user in a same interaction manner, different user experiences may be brought to the user. For example, both a smart TV and a smartphone may display images to the user, that is, both the smart TV and the smartphone support an interaction manner of "image display". When a same image is displayed by the smart TV and the smartphone, visual quality of the image displayed on the smart TV is better than that of the image displayed on the smartphone, and therefore the smart TV can bring a better user experience to the user.

A task object of a task executed by the terminal device may include one or more user experience (user experience, UX) elements, and one UX element may need support from one or more interaction manners supported by the terminal device to achieve a service objective. When the terminal performs service processing on each UX element, a user experience may be affected by various interaction manners supported by the terminal device. For example, a task executed by the smart TV is playing a movie, and a source file of the movie is a task object. At least a "video file" used to support the terminal device in displaying image information of the movie and an "audio file" used to support the terminal device in providing sound information of the movie may be obtained by parsing the source file, where both the "video file" and the "audio file" are UX elements of the task. Correspondingly, the "video file" needs support from the interaction manner of "image display" provided by the smart TV to achieve a service objective of the "video file", and the "audio file" needs support from an interaction manner of "audio playing" provided by the smart TV to achieve a service objective of the "audio file". Both the interaction manners "image display" and "audio playing" provided by the smart TV may affect a user experience brought by the smart TV playing the movie.

A new technical solution is needed to better process a UX element, thereby further improving a user experience.

**SUMMARY**

Embodiments of this application provide a method and apparatus for distributed processing of a UX element, to improve a user experience.

According to a first aspect, a method for distributed processing of a UX element is provided. The method may be performed by a communication apparatus. The communication apparatus may be a terminal device, or may be a module, a chip, or a system on chip deployed in a terminal device. In this method, the communication apparatus may obtain UX capability information of at least two terminal devices, where the UX capability information of the terminal device is used to indicate a UX capability corresponding to each of at least one interaction manner supported by the terminal device. In addition, the communication apparatus may further receive a target task request, where the target task request is used to request processing on at least two UX elements, the target task request includes UX requirement information of each of the at least two UX elements, and the UX requirement information of the UX element is used to indicate a UX capability requirement corresponding to each of at least one interaction manner that supports the UX element in achieving a service objective. Then the communication apparatus may determine, based on the UX capability information of the at least two terminal devices and the UX requirement information of the at least two UX elements, a UX element that needs to be processed by each of the at least two terminal devices, where the UX element that needs to be processed by the terminal device is a UX element in the at least two UX elements. Then the communication apparatus can provide, for each of the at least two terminal devices, the UX element that needs to be processed by each of the at least two terminal devices. In this way, distributed processing performed by a plurality of terminal devices on a plurality of UX elements can be determined intelligently and achieved, thereby improving a user experience.

In a possible implementation, the target task request may include user permission of the at least two UX elements, where the user permission of the UX element is used to indicate whether at least one user has permission to interact with the UX element. The communication apparatus may further obtain user information of the at least two terminal devices, where the user information of the terminal device is used to indicate whether at least one user has permission to access the terminal device. Correspondingly, the communication apparatus may determine, based on the UX capability information and the user information of the at least two terminal devices and the UX capability requirement and the user permission of the at least two UX elements, the UX element that needs to be processed by each of the at least two terminal devices. In this way, on one hand, it is ensured that the UX element can be provided to a user who has permission to interact with the UX element, so that the UX element can achieve a service objective, and on the other hand, it is avoided that the UX element is provided to a user who does not have the permission to interact with the UX element. As a result, a risk of sensitive data leakage is reduced.

In a possible implementation, for any target user having the permission to access the terminal device, the target user has permission to interact with a UX element that needs to be processed by the terminal device. In other words, for any terminal device, if a user who has permission to access the terminal device does not have permission to interact with a specific UX element, the UX element is not provided for the terminal device. As a result, the risk of sensitive data leakage is reduced.

In a possible implementation, the communication apparatus may further obtain UX preference information of the at least two terminal devices, where the UX preference information of the terminal device is used to indicate a UX preference corresponding to each of at least one UX category, any UX element belongs to one of the at least one UX category, and the UX preference corresponding to the UX category is used to indicate an expectation degree of a user for using the terminal device to process a UX element belonging to the UX category. Correspondingly, the communication apparatus may determine, based on the UX capability information and the UX preference information of the at least two terminal devices and the UX requirement information of the at least two UX elements, the UX element that needs to be processed by each of the at least two terminal devices. This is helpful to determine, with reference to a preference of the user for an UX element, whether to provide the UX element for a corresponding terminal device. As a result, a user experience is further improved.

In a possible implementation, the at least two terminal devices include a first terminal device and at least one second terminal device, the at least one second terminal device and the first terminal device establish a communication connection, and the first terminal device includes the communication apparatus. Correspondingly, the communication apparatus may receive UX preference information of the at least one second terminal device from the at least one second terminal device. The communication apparatus may further display a UX preference management interface, where the UX preference management interface includes: a category identifier of the at least one UX category and at least one pattern combination that is in a one-to-one correspondence with the identifier of the at least one UX category; and determine UX preference information of the first terminal device based on a service operation performed by the user on the at least one pattern combination. In this way, it is convenient for the user to dynamically adjust, based on an actual situation of the user, UX preferences of the terminal device for UX elements belonging to UX categories. This further improves a user experience.

In a possible implementation, the target task request includes screen requirement information of the at least two UX elements, where the screen requirement information of the UX element is used to indicate a maximum height, a minimum height, a maximum width, and a minimum width that a user interface (user interface, UI) element of the UX element has when the UI element is displayed on a display screen of a terminal device. The communication apparatus is further configured to obtain screen information of the at least two terminal devices, where the screen information of the terminal device is used to indicate a height and a width of a display screen of the terminal device. Correspondingly, the communication apparatus may determine, based on the UX capability information and the screen information of the at least two terminal devices and the UX requirement information and the screen requirement information of the at least two UX elements, the UX element that needs to be processed by each of the at least two terminal devices. This ensures that when the UI element of the UX element is displayed on the display screen of the terminal device, a display effect of the UI element is good.

In a possible implementation, the communication apparatus may further determine screen usage information of the at least two UX elements based on the UX capability information of the at least two terminal devices and the UX requirement information of the at least two UX elements, where the screen usage information of the UX element is used to indicate a height and a width that the UI element of the UX element has when the UI element is displayed on a display screen of a terminal device used to process the UX element. Correspondingly, the communication apparatus can further provide, for each of the at least two terminal devices, screen usage information of the UX element that needs to be processed by each of the at least two terminal devices.

In a possible implementation, before the communication apparatus provides, for each of the at least two terminal devices, the UX element that needs to be processed by each of the at least two terminal devices, the communication apparatus may further display an allocation policy confirmation interface, so that a user performs confirmation, where the allocation policy confirmation interface is used to indicate the UX element that needs to be processed by each of the at least two terminal devices. In this way, an allocation policy for the plurality of UX elements may be intuitively displayed to the user, and the UX element that needs to be processed by each of the at least two terminal devices is provided for each of the at least two terminal devices only when the user confirms that the plurality of UX elements are allocated and processed according to the allocation policy. This further improves a user experience.

According to a second aspect, a communication apparatus is provided. For beneficial effects, refer to the descriptions in the first aspect. The communication apparatus may be a terminal device, or may be a module, a chip, or a system on chip deployed in the terminal device. The communication apparatus may include a processing unit that is configured to obtain UX capability information of at least two terminal devices, where the UX capability information of the terminal device is used to indicate a UX capability corresponding to each of at least one interaction manner supported by the terminal device. The processing unit is further configured to receive a target task request, where the target task request is used to request processing on at least two UX elements, the target task request includes UX requirement information of the at least two UX elements, and the UX requirement information of the UX element is used to indicate a UX capability requirement corresponding to each of at least one interaction manner that supports the UX element in achieving a service objective. The processor is further configured to determine, based on the UX capability information of the at least two terminal devices and the UX requirement information of the at least two UX elements, a UX element that needs to be processed by each of the at least two terminal devices, where the UX element that needs to be processed by the terminal device is a UX element in the at least two UX elements. The communication apparatus may include a transceiver unit configured to provide, for each of the at least two terminal devices, the UX element that needs to be processed by each of the at least two terminal devices.

In a possible implementation, the target task request includes user permission of the at least two UX elements, where the user permission of the UX element is used to indicate whether at least one user has permission to interact with the UX element. The processing unit is further configured to obtain user information of the at least two terminal devices, where the user information of the terminal device is used to indicate whether at least one user has permission to access the terminal device. The processing unit is specifically configured to determine, based on the UX capability information and the user information of the at least two terminal devices and the UX capability requirement and the user permission of the at least two UX elements, the UX element that needs to be processed by each of the at least two terminal devices.

In a possible implementation, for any target user having the permission to access the terminal device, the target user has permission to interact with a UX element that needs to be processed by the terminal device.

In a possible implementation, the processing unit is further configured to obtain UX preference information of the at least two terminal devices, where the UX preference information of the terminal device is used to indicate a UX preference corresponding to each of at least one UX category, any UX element belongs to one of the at least one UX category, and the UX preference corresponding to the UX category is used to indicate an expectation degree of a user for using the terminal device to process a UX element belonging to the UX category. The processing unit is specifically configured to determine, based on the UX capability information and UX preference information of the at least two terminal devices and the UX requirement information of the at least two UX elements, the UX element that needs to be processed by each of the at least two terminal devices.

In a possible implementation, the at least two terminal devices include a first terminal device and at least one second terminal device, the at least one second terminal device and the first terminal device establish a communication connection, and the first terminal device includes the communication apparatus. The communication apparatus further includes: a display unit, configured to display a UX preference management interface, where the UX preference management interface includes a category identifier of at least one UX category and at least one pattern combination that is in a one-to-one correspondence with the identifier of the at least one UX category. The processing unit is specifically configured to determine UX preference information of the first terminal device based on a service operation performed by the user on the at least one pattern combination. The transceiver unit is further configured to receive UX preference information of the at least one second terminal device from the at least one second terminal device.

In a possible implementation, the target task request includes screen requirement information of the at least two UX elements, where the screen requirement information of the UX element is used to indicate a maximum height, a minimum height, a maximum width, and a minimum width that a user interface UI element of the UX element has when the UI element is displayed on a display screen of a terminal device. The processing unit is further configured to obtain screen information of the at least two terminal devices, where the screen information of the terminal device is used to indicate a height and a width of the display screen of the terminal device. The processing unit is specifically configured to determine, based on the UX capability information and the screen information of the at least two terminal devices and the UX requirement information and the screen requirement information of the at least two UX elements, the UX element that needs to be processed by each of the at least two terminal devices.

In a possible implementation, the processing unit is further configured to determine screen usage information of the at least two UX elements based on the UX capability information of the at least two terminal devices and the UX requirement information of the at least two UX elements, where the screen usage information of the UX element is used to indicate a height and a width that the UI element of the UX element has when the UI element of the UX element is displayed on a display screen of a terminal device used to process the UX element. The transceiver unit is further configured to provide, for each of the at least two terminal devices, screen usage information of the UX element that needs to be processed by each of the at least two terminal devices.

In a possible implementation, the communication apparatus further includes a display unit, configured to display an allocation policy confirmation interface, so that the user performs confirmation, where the allocation policy confirmation interface is used to indicate the UX element that needs to be processed by each of the at least two terminal devices.

According to a third aspect, a communication apparatus is provided. For beneficial effects, refer to the descriptions in the first aspect. The communication apparatus may be a terminal device. The communication apparatus includes a processor that is configured to obtain UX capability information of at least two terminal devices, where the UX capability information of the terminal device is used to indicate a UX capability corresponding to each of at least one interaction manner supported by the terminal device. The processor is further configured to receive a target task request, where the target task request is used to request processing on at least two UX elements, the target task request includes UX requirement information of the at least two UX elements, and the UX requirement information of the UX element is used to indicate a UX capability requirement corresponding to each of at least one interaction manner that supports the UX element in achieving a service objective. The processor is further configured to determine, based on the UX capability information of the at least two terminal devices and the UX requirement information of the at least two UX elements, a UX element that needs to be processed by each of the at least two terminal devices, where the UX element that needs to be processed by the terminal device is a UX element in the at least two UX elements. The communication apparatus may include a transceiver configured to provide, for each of the at least two terminal devices, the UX element that needs to be processed by each of the at least two terminal devices.

In a possible implementation, the target task request includes user permission of the at least two UX elements, where the user permission of the UX element is used to indicate whether at least one user has permission to interact with the UX element. The processor is further configured to obtain user information of the at least two terminal devices, where the user information of the terminal device is used to indicate whether at least one user has permission to access the terminal device. The processor is specifically configured to determine, based on the UX capability information and the user information of the at least two terminal devices and the UX capability requirement and the user permission of the at least two UX elements, the UX element that needs to be processed by each of the at least two terminal devices. In a possible implementation, for any target user having the permission to access the terminal device, the target user has permission to interact with a UX element that needs to be processed by the terminal device.

In a possible implementation, the processor is further configured to obtain UX preference information of the at least two terminal devices, where the UX preference information of the terminal device is used to indicate a UX preference corresponding to each of at least one UX category, any UX element belongs to one of the at least one UX category, and the UX preference corresponding to the UX category is used to indicate an expectation degree of a user for using the terminal device to process a UX element belonging to the UX category. The processor is specifically configured to determine, based on the UX capability information and UX preference information of the at least two terminal devices and the UX requirement information of the at least two UX elements, the UX element that needs to be processed by each of the at least two terminal devices.

In a possible implementation, the at least two terminal devices include a first terminal device and at least one second terminal device, the at least one second terminal device and the first terminal device establish a communication connection, and the first terminal device includes the communication apparatus. The communication apparatus further includes: a display, configured to display a UX preference management interface, where the UX preference management interface includes a category identifier of at least one UX category and at least one pattern combination that is in a one-to-one correspondence with the identifier of the at least one UX category. The processor is specifically configured to determine UX preference information of the first terminal device based on a service operation performed by the user on the at least one pattern combination. The transceiver is further configured to receive UX preference information of the at least one second terminal device from the at least one second terminal device.

In a possible implementation, the target task request includes screen requirement information of the at least two UX elements, where the screen requirement information of the UX element is used to indicate a maximum height, a minimum height, a maximum width, and a minimum width that a user interface UI element of the UX element has when the UI element is displayed on a display screen of a terminal device. The processor is further configured to obtain screen information of the at least two terminal devices, where the screen information of the terminal device is used to indicate a height and a width of a display screen of the terminal device. The processor is specifically configured to determine, based on the UX capability information and the screen information of the at least two terminal devices and the UX requirement information and the screen requirement information of the at least two UX elements, the UX element that needs to be processed by each of the at least two terminal devices.

In a possible implementation, the processor is further configured to determine screen usage information of the at least two UX elements based on the UX capability information of the at least two terminal devices and the UX requirement information of the at least two UX elements, where the screen usage information of the UX element is used to indicate a height and a width that the UI element of the UX element has when the UI element of the UX element is displayed on a display screen of a terminal device used to process the UX element. The transceiver is further configured to provide, for each of the at least two terminal devices, screen usage information of the UX element that needs to be processed by each of the at least two terminal devices.

In a possible implementation, the communication apparatus further includes a display, configured to display an allocation policy confirmation interface, so that the user performs confirmation, where the allocation policy confirmation interface is used to indicate the UX element that needs to be processed by each of the at least two terminal devices.

According to a fourth aspect, a computer-readable storage medium is provided. The computer-readable storage medium is configured to store executable code/an executable instruction, where when the executable code/instruction is executed by a processor of a terminal device, the terminal device is enabled to implement the method according to any implementation of the first aspect.

According to a fifth aspect, a computer program product is provided. The computer program product includes computer program code, and when the computer program code is run on a computer, the computer is enabled to perform the method according to any implementation of the first aspect.

According to a sixth aspect, a terminal device is provided. The terminal device includes a memory and a processor, where the memory stores executable code/an executable instruction, and when executing the executable code/instruction, the processor implements the method according to any implementation of the first aspect. According to a seventh aspect, a chip system is provided. The chip system includes a processor, configured to invoke a computer program from a memory and run the computer program, so that a terminal device installed with the chip system implements the method according to any implementation of the first aspect.

In a possible design, the chip system may include a chip, or may include a chip and another discrete device.

## BRIEF DESCRIPTION OF DRAWINGS

The following briefly describes accompanying drawings used to describe embodiments or the conventional technology.

FIG. 1 is a schematic diagram of a structure of an example terminal device according to an embodiment of this application;

FIG. 2 is a schematic diagram of a software system applicable to a technical solution provided in an embodiment of this application;

FIG. 3 is a schematic diagram of a service scenario applicable to a technical solution provided in an embodiment of this application;

FIG. 4 is a schematic flowchart of a method for distributed processing of a UX element according to an embodiment of this application;

FIG. 5A is a first schematic diagram of an example UX preference management interface according to an embodiment of this application;

FIG. 5B is a second schematic diagram of an example UX preference management interface according to an embodiment of this application;

FIG. 6 is a schematic diagram of an example allocation policy confirmation interface according to an embodiment of this application;

FIG. 7A is an example graphical user interface displayed when a terminal device executes a target task;

FIG. 7B-1 to FIG. 7B-3 are a first schematic diagram of performing distributed processing on a plurality of UX elements by a plurality of terminal devices;

FIG. 7C-1 to FIG. 7C-4 are a second schematic diagram of performing distributed processing on a plurality of UX elements by a plurality of terminal devices;

FIG. 7D-1 to FIG. 7D-4 are a third schematic diagram of performing distributed processing on a plurality of UX elements by a plurality of terminal devices;

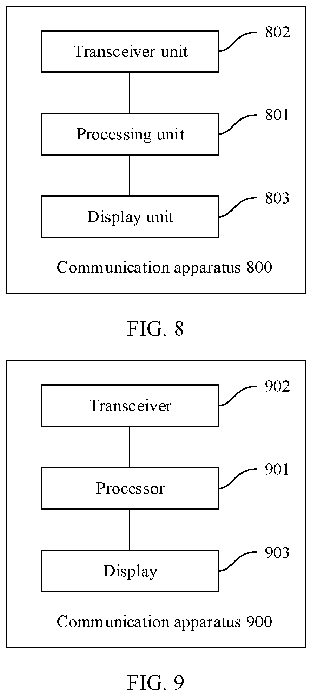

FIG. 8 is a schematic diagram of a structure of a communication apparatus according to an embodiment of this application; and

FIG. 9 is a schematic diagram of a structure of another communication apparatus according to an embodiment of this application.

## DESCRIPTION OF EMBODIMENTS

In embodiments of this application, a terminal device includes but is not limited to a smartphone, a tablet computer, and a personal computer, and may further include a smart sound box, a smart TV, a smart watch, smart glasses, and the like. Terminal devices of different forms/types/models may have different hardware structures.

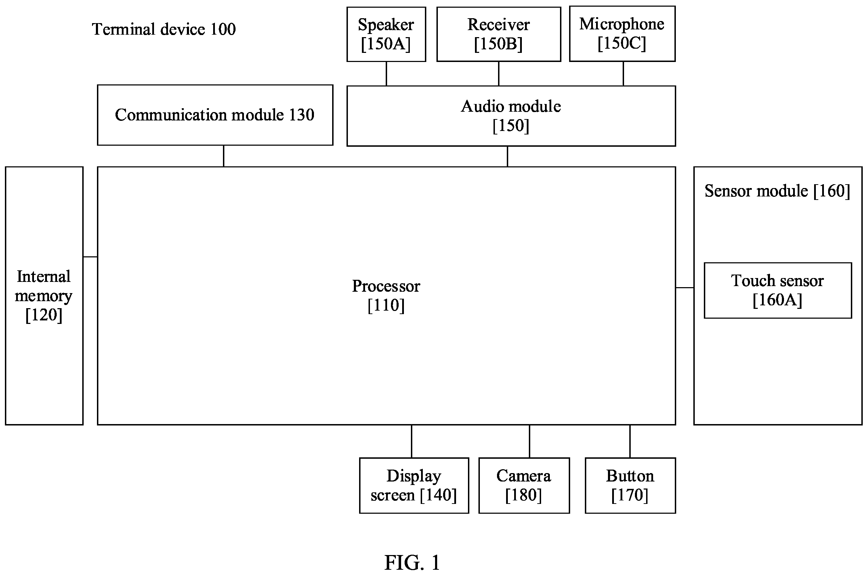

FIG. 1 is a schematic diagram of a structure of an example terminal device according to an embodiment of this application. As shown in FIG. 1, the terminal device 100 may include at least a processor 110, an internal memory 120, and a communication module 130. The terminal device 100 may further include one or more of a display screen 140, an audio module 150, a speaker 150A, a receiver 150B, a microphone 150C, a sensor module 160, a button 170, and a camera 180. The sensor module 160 may include but is not limited to a touch sensor 160A.

The internal memory 120 may store a software system of the terminal device 100 and an application deployed in the software system, and may further store various types of data created when the terminal device 100 is being used. In addition, the internal memory 120 may include a high-speed random access memory and a non-volatile memory, for example, a magnetic disk storage device, a flash storage device, and a universal flash storage (universal flash storage, UFS).

The processor 110 runs executable program code/an executable instruction stored in the internal memory 120, to implement various functions and data processing of the terminal device 100, for example, to implement a method provided in any embodiment of this application, where the method is performed by a terminal device.

As described above, terminal devices of different forms/types/models may have different hardware structures. Correspondingly, depending on a hardware structure of the terminal device, the terminal device may support one or more interaction manners, so that a user exchanges information with the terminal device in various interaction manners supported by the terminal device. For example, interaction manners supported by a smart watch may include image display, audio playing, touch control, and sound input; interaction manners supported by a smartphone include image display, audio playing, text input, touch control, and sound input; interaction manners supported by a tablet computer may include image display, audio playing, text input, touch control, and sound input; interaction manners supported by a smart TV may include image display, audio playing, text input, and sound input; interaction manners supported by a personal computer may include image display, audio playing, text input, touch control, and sound input; and interaction manners supported by a smart sound box may include audio playing and sound input.

The terminal device supporting the interaction manner of "image display" means that the terminal device may display an image by using a "display screen" configured for the terminal device, to provide corresponding text and/or image information for the user.

The terminal device supporting the interaction manner of "audio playing" means that the terminal device may play audio by using an " audio module" configured for the terminal device, to provide corresponding sound information for the user.

The terminal device supporting the interaction manner of "text input" means that the terminal device may receive text data input by the user by using a "button" or another input device configured for the terminal device.

The terminal device supporting the interaction manner of "touch control" means that the terminal device may sense, by using a "touch sensor" or another sensor device configured for the terminal device, an operation (for example, a touch operation) performed by the user on a UI element.

The terminal device supporting the interaction manner of "sound input" means that the terminal device may receive, by using an "audio module" configured for the terminal device, a sound signal sent by the user.

In embodiments of this application, for a task that is being executed or is to be executed by the terminal device, if information exchange with the user needs to be implemented in the task, a task object of the task usually includes at least one UX element. Executing the task by the terminal device is essentially performing service processing on the at least one UX element included in the task object of the task. One UX element may include one or more executable files. When a computer/terminal device executes the executable file included in the UX element, that is, when the computer/terminal device performs service processing on the UX element, the computer/terminal device may provide corresponding information for the user and/or receive information provided by the user, where the information providing and information reception are performed in one or more interaction manners supported by the computer/terminal device.

It may be understood that if the terminal device supports at least two interaction manners, for any two interaction manners supported by the terminal device, when the terminal device performs service processing on one UX element, the any two interaction manners may bring different user experiences to the user. For any two different terminal devices, when the any two terminal devices respectively perform service processing on a same UX element, a same interaction manner supported by the any two different terminal devices may bring different user experiences to the user.

In embodiments of this application, a user experience brought to the user by each of at least one interaction manner supported by the terminal device may be quantized. In other words, a UX capability corresponding to each of the at least one interaction manner supported by the terminal device may be quantized. This helps indicate a difference between user experiences brought by any two interaction manners supported by a terminal device when the terminal device performs service processing on one UX element, and helps indicate a difference between user experiences brought by same interaction manners supported by different terminal devices when different terminal devices respectively perform service processing on a same UX element.

In a specific example, when the terminal device performs service processing on the UX element, an interaction manner supported by the terminal device that brings a better user experience to the user may be configured with a UX capability parameter having a larger value. On the contrary, an interaction manner supported by the terminal device that brings a poorer user experience to the user may be configured with a UX capability parameter having a smaller value.

For example, refer to UX capability parameter configuration shown in the following Table 1.

Table 1

|  | Smart watch | Smartphone | Tablet computer | Smart TV | Personal computer | Smart sound box |
|---|---|---|---|---|---|---|
| Image display | 2 | 3 | 4 | 5 | 4 | 0 |
| Audio playing | 2 | 3 | 3 | 4 | 2 | 5 |
| Text input | 0 | 3 | 2 | 1 | 5 | 0 |
| Touch control | 1 | 5 | 4 | 0 | 2 | 0 |
| Sound input | 3 | 4 | 2 | 2 | 2 | 5 |

As shown in Table 1, for any terminal device in terminal devices such as the smart watch, the smartphone, the tablet computer, the smart TV, a personal computer, and the smart sound box, a user experience brought by any of interaction manners such as "image display", "audio playing", "text input", "touch control", and "sound input" supported by the any terminal device may be quantized by using one of UX capability parameters such as 1, 2, 3, 4, and 5 when the terminal device performs service processing on the UX element. For any interaction manner that is not supported by a terminal device, a UX capability parameter corresponding to the interaction manner may be configured as 0 on the terminal device.

It may be understood that Table 1 is merely used to for describing the technical solutions provided in embodiments of this application. In an actual application scenario, a terminal device in another form, for example, smart glasses, may be further included. The terminal device may further support another interaction manner, for example, support an interaction manner of "image collection". The terminal device supporting the interaction manner of "image collection" means that the terminal device may collect image information by using a "camera" configured for the terminal device. Another UX capability parameter may be further configured for the at least one interaction manner supported by the terminal device. For example, for the interaction manner "image display" supported by the smart watch, a corresponding UX capability parameter may be configured as 1. In conclusion, a UX capability parameter corresponding to any interaction manner supported by the terminal device may be configured based on an actual service scenario and a customized requirement of the user.

In embodiments of this application, the UX capability parameter corresponding to the at least one interaction manner supported by the terminal device are also referred to as UX capability information of the terminal device. In a specific example, the UX capability parameter corresponding to the at least one interaction manner supported by the terminal device may be used to form an eigenvector indicating UX capability information of the terminal device.

For example, UX capability information of the smart watch in Table 1 may be indicated by a feature vector [2, 2, 0, 1, 3]. UX capability information of the smartphone in Table 1 may be indicated by a feature vector [3, 3, 3, 5, 4]. UX capability information of the tablet computer in Table 1 may be indicated by an eigenvector [4, 3, 2, 4, 2]. UX capability information of the smart TV in Table 1 may be indicated by a feature vector [5, 4, 1, 0, 2]. UX capability information of the personal computer in Table 1 may be indicated by a feature vector [4, 2, 5, 2, 2]. UX capability information of the smart sound box in Table 1 may be indicated by a feature vector [0, 5, 0, 0, 5].

In a possible implementation, the UX capability parameter 0 or the UX capability parameter 1 may be further used to quantize a user experience brought to the user by any interaction manner supported by the terminal device. For example, interaction manners supported by the smart watch include image display, audio playing, touch control, and sound input. For the interaction manners such as image display, audio playing, touch control, and sound input that are supported by the smart watch, a UX capability parameter corresponding to the interaction manners may be configured as 1. For other interaction manners (for example, text input) that are not supported by the smart watch, a UX capability parameter corresponding to the interaction manners may be configured as 0. Correspondingly, UX capability information of the smart watch may be indicated by a feature vector [1, 1, 0, 1, 1].

In this embodiment of this application, a UX capability requirement of a UX element may be quantized. The UX capability requirement of the UX element is at least one interaction manner that should be provided by the terminal device when the terminal device performs service processing on the UX element, and importance of the at least one interaction manner to the UX element, in other words, a UX capability of the at least one interaction manner expected by the user. In this way, the UX capability requirement of the UX element forms a basis for determining whether to provide the UX element for a corresponding terminal device, so as to ensure that when the terminal device performs service processing on the UX element, the UX element can achieve a service objective with support of the terminal device.

In a possible implementation, if importance of an interaction manner to a UX element is high, a UX requirement parameter with a large value may be configured for the interaction manner in UX requirement information of the UX element; on the contrary, if importance of an interaction manner to a UX element is low, a UX requirement parameter with a small value may be configured for the interaction manner in UX requirement information of the UX element. If a UX element does not need support from an interaction manner when achievement of a service objective of the UX element needs support from a terminal device, a UX requirement parameter corresponding to the interaction manner may be configured as 0 in UX requirement information of the UX element, or the UX requirement parameter corresponding to the interaction manner is not configured in UX requirement information of the UX element.

For example, when playing a video by using a mobile phone, a user may control playing of the video in a manner of touch control. The mobile phone needs to display a UI element of a playing control component on a display screen of the mobile phone, so that the user performs a touch operation on the UI element of the playing control component, to control a process of video playing. In addition, the user may further control playing of the video in a manner of sound control. The playing control component may be configured to receive and respond to a sound signal provided by the user, so as to implement control on the process of video playing. In other words, the UX element may be a "playing control component" of a video, and a service objective to be achieved by the "playing control component" includes: displaying a UI element of the "playing control component" to a user through a display screen of a terminal device, sensing a touch operation performed by the user on the UI element of the "playing control component", and receiving and responding to a sound signal provided by the user, where the sound signal may be used to trigger the playing control component to control playing progress, volume, and the like of the video. In other words, the three interaction manners of "image display", "touch control", and "sound input" are of high importance to the UX element. In the UX requirement information of the UX element, UX requirement parameters with large values may be respectively configured for the three interaction manners of "image display", "touch control", and "sound input".

In a specific example, UX elements may be further classified, and UX elements belonging to a same UX category may have a same UX requirement parameter. For example, refer to UX requirement parameter configuration shown in the following Table 2.

**Table 2**

|  | Audio | Lyrics | Playing control component | Video |
|---|---|---|---|---|
| Image display | 0 | 5 | 3 | 5 |
| Audio playing | 5 | 0 | 0 | 5 |
| Text Input | 0 | 0 | 0 | 2 |
| Touch control | 0 | 0 | 5 | 4 |
| Sound input | 1 | 0 | 2 | 2 |

As shown in Table 2, for any of the UX categories such as "audio", "lyrics", "playing control component", and "video", one of UX requirement parameters such as 0, 1, 2, 3, 4, and 5 may be used to indicate importance of any of the interaction manners such as "image display", "audio playing", "text input", "touch control", and "sound input" to an UX element in the UX category when the terminal device performs service processing on the UX element in the UX category. If a UX element does not need support from an interaction manner when achievement of a service objective of the UX element needs support from a terminal device, a UX requirement parameter corresponding to the interaction manner may be configured as 0 in a UX category to which the UX element belongs. For example, for achievement of a service objective of a UX element in the UX category "audio", support from the interaction manner "image display" is not needed, and a UX requirement parameter corresponding to the interaction manner "image display" may be configured as 0 in the UX category " audio", or the UX requirement parameter corresponding to the interaction manner "image display" is not configured in the UX category "audio".

It may be understood that Table 2 is merely used to for describing the technical solutions provided in embodiments of this application. In an actual application scenario, the UX category may include but is not limited to "audio", "lyrics", "playing control component", and "video" shown in Table 2. For example, UX categories such as comment, text data, email, and navigation may further be included. A UX parameter of another value may alternatively be configured for an interaction manner in a UX category. For example, in the UX category "playing control component", a UX parameter corresponding to the interaction manner "image display" is configured as 2. In conclusion, how to determine UX categories and configure UX requirement parameters corresponding to various interaction manners in the UX categories depends on specific service scenarios and customized requirements of users.

In a specific example, the UX requirement parameter configured for one or more interaction manners in the UX category may be used to form a feature vector. The feature vector is used to indicate UX requirement information of a UX element in the UX category, that is, used to indicate a UX capability requirement of the UX element in the UX category.

For example, UX requirement information of a UX element in the UX category "audio" in Table 2 may be indicated by a feature vector [0, 5, 0, 0, 1]. For UX requirement information of a UX element in the UX category "lyrics" in Table 2 may be indicated by a feature vector [5, 0, 0, 0, 0]. For UX requirement information of a UX element in the UX category "playing control component" in Table 2 may be indicated by a feature vector [3, 0, 0, 5, 2]. For UX requirement information of a UX element in the UX category "video" in Table 2 may be indicated by a feature vector [5, 5, 2, 4, 2].

In a possible implementation, importance of a UX element to any interaction manner may be quantized by using a UX requirement parameter 0 or a UX requirement parameter 1. If a UX element does not need support from an interaction manner when achievement of a service objective needs support from a terminal device, a UX requirement parameter corresponding to the interaction manner may be configured as 0 in UX requirement information of the UX element; on the contrary, if a UX element needs support from an interaction manner when achievement of a service objective of the UX element needs support from a terminal device, an UX requirement parameter corresponding to the interaction manner may be configured as 1 in UX requirement information of the UX element.

For example, for a UX element in the UX category "playing control component", a service objective that can be achieved by the UX element with support from the terminal device includes: displaying the UI element of the "playing control component" to the user through a display screen of the terminal device, sensing a touch operation performed by the user on the UI element of the "playing control component", and receiving and responding to a sound signal provided by the user, where the sound signal is used to trigger the playing control component to control playing progress, volume, and the like of a video. In the UX category "playing control component", the UX requirement parameters corresponding to the three interaction manners "image display", "touch control", and "sound input" may be configured as 1, and the UX requirement parameters corresponding to the interaction manners such as "audio play" and "text input" may be configured as 0. Correspondingly, UX requirement information of UX elements in the UX category "playing control component" may be indicated by a feature vector [1, 0, 0, 1, 1].

In embodiments of this application, a preference degree of the terminal device for a UX element may also be quantized. The preference degree of the terminal device for the UX element refers to a degree of expectation of the user to process the UX element by using the terminal device.

In a specific example, if the terminal device has a high preference degree for a UX element in a UX category, a UX preference parameter with a large value may be used to indicate a UX preference of the terminal device for the UX element in the UX category. On the contrary, if the terminal device has a low preference degree for a UX element in a UX category, a UX preference parameter with a small value may be used to indicate a UX preference of the terminal device for the UX element in the UX category.

For example, refer to UX preference parameter configuration shown in the following Table 3.

**Table 3**

| UX category | UX preference parameter |
|---|---|
| Audio | N1 |
| Lyrics | N2 |
| Playing control component | N3 |
| Video | N4 |

It may be understood that Table 3 is merely used to for describing the technical solutions provided in embodiments of this application. In an actual application scenario, the UX category may include but is not limited to audio, lyrics, playing control component, and video shown in Table 3, for example, UX categories such as comment, text data, email, and navigation may be further included. Correspondingly, the UX preference of the terminal device may further include UX preference parameters of the smart device for UX categories such as comment, text data, email, and navigation. "N1", "N2", "N3", and "N4" may be replaced with actual values in an actual service scenario.

In a possible implementation, the UX preference information of the terminal device may be configured by the user. In a possible implementation, the UX preference information of the terminal device may be determined according to one or more of a customized rule input by the user, a user profiling model, and a suggested scenario.

For example, if it is specified by the customized rule input by the user that a UX element needs to be allocated to a specific terminal device, a UX preference parameter with a large value may be configured for a UX preference of the terminal device for a UX category to which the UX element belongs.

For example, the user profiling model of the user may be determined based on behavior data of using a terminal device by the user within a preset time period. If the user profiling model indicates that the user frequently uses the terminal device within the preset time period to perform service processing on a UX element in a UX category, a UX preference parameter with a large value may be used to indicate a UX preference of the terminal device for the UX element in the UX category.

For example, the suggested scenario determined based on real-time scenario data collected by the terminal device indicates that a " smart TV" is in a living room, the user carries a " smartphone", and the user is in a bedroom that is far from the living room. In this case, for a UX element in the UX category "video", even if service processing on the UX element is performed by the "smart TV", the interaction manner "image display" supported by the "smart TV" does not bring a good user experience to the user in the bedroom. Therefore, a UX preference of the "smart TV" for the UX category "video" may be configured as a UX preference parameter with a small value.

In embodiments of this application, if achievement of a service objective of a UX element needs support from a terminal device, support from the interaction manner of "image display" is needed, that is, a graphical user interface needs to be displayed to the user through a display screen of the terminal device. To ensure that the graphical user interface has a good display effect on the display screen of the terminal device, screen requirement information of the XU element may be preconfigured. The screen requirement information is at least used to indicate a minimum height, a minimum width, a maximum height, and a maximum width of a UI element required for displaying the UI element of the UX element on the display screen of the terminal device. In some embodiments, the screen requirement information may further indicate a minimum area and a maximum area of the UI element occupied on the display screen when the UI element of the UX element is displayed on the display screen of the terminal device.

In embodiments of this application, to prevent the UX element from being provided to a user who does not have permission to interact with the UX element, and reduce a risk of sensitive data leakage, a user permission may be further configured for the UX element. The user permission of the UX element is used to indicate whether one or more users have permission to interact with the UX element. Correspondingly, user information may be further configured for the terminal device, where the user information of the terminal device is used to indicate whether one or more users have permission to access the terminal device.

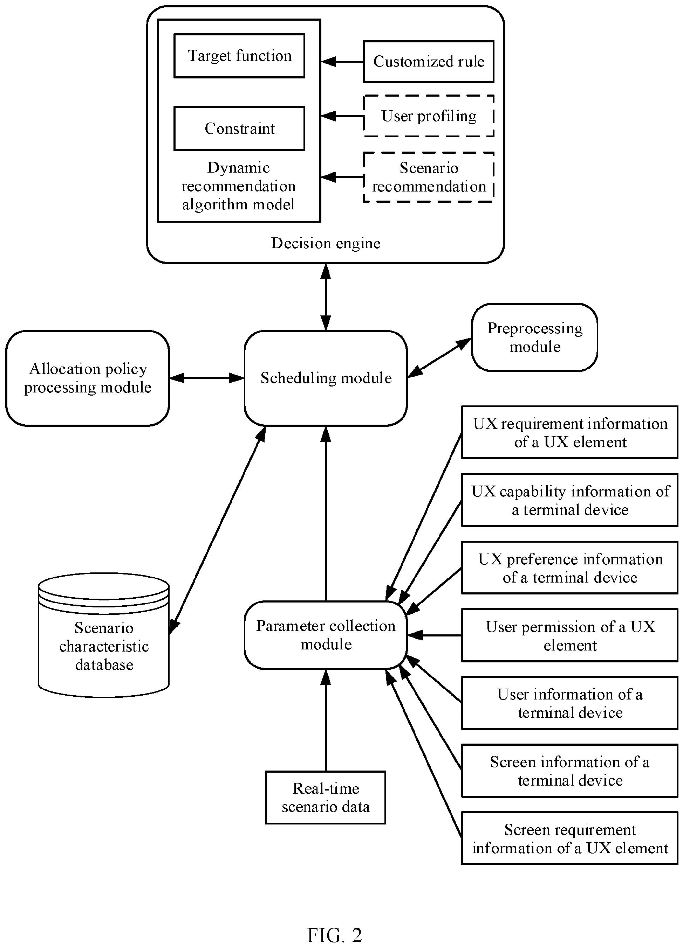

With reference to FIG. 2, the following describes, by using an example, a software system applicable to the technical solutions provided in embodiments of this application.

FIG. 2 is a schematic diagram of the software system applicable to the technical solutions provided in embodiments of this application. As shown in FIG. 2, the software system may include a data collection module, a scenario characteristic database, an allocation policy processing module, a scheduling processing module, a preprocessing module, and a decision engine.

The data collection module is configured to collect device information of the terminal device and UX information of the UX element. The device information of the terminal device includes but is not limited to one or more of UX capability information of the terminal device, user information of the terminal device, UX preference information of the terminal device, real-time scenario data of the terminal device, and screen information of the terminal device. The UX information of the UX element includes but is not limited to one or more of screen requirement information of the UX element, user permission of the UX element, and UX requirement information of the UX element.

The scheduling module is configured to schedule data exchanged between the decision engine, the allocation policy processing module, the preprocessing module, the parameter collection module, and the scenario characteristic database. For example, for UX capability information of a terminal device that is collected by the data collection module, the scheduling module may provide the UX capability information of the terminal device to the preprocessing module, so that the preprocessing module converts the UX capability information of the terminal device into a feature vector used to indicate the UX capability information of the terminal device. Then, for the feature vector obtained by the preprocessing module, the scheduling processing module may provide the feature vector for the decision engine. The scenario characteristic database is configured to store scenario characteristic data, so that matching is performed by the preprocessing module and/or the decision engine on the real-time scenario data of the terminal device with the scenario characteristic data, to obtain a suggested scenario.

The decision engine may include at least a dynamic algorithm recommendation model. The dynamic algorithm recommendation model may include a target function and one or more constraints. The decision engine may be at least configured to search for an optimal solution of the target function based on one or more constraints, to obtain a value of a decision variable used to determine an allocation policy. The decision engine may be further configured to determine the UX preference information of the terminal device according to the user profiling, the suggested scenario, and the customized rule input by the user.

The allocation policy processing module is configured to obtain an allocation policy for at least two UX elements based on values of decision variables provided by the decision engine, where the allocation policy indicates the UX elements that need to be respectively processed by at least two terminal devices, and the element that needs to be processed by the terminal device is the UX element in the at least two UX elements. For each of the at least two terminal devices, the UX element that needs to be processed by the terminal device is provided for the terminal device according to the allocation policy. If achievement of a service objective of a UX element needs support from the interaction manner of "image display", the allocation policy may further indicate a height and a width that a UI element of the UX element has when the UI element is displayed on a display screen of the terminal device configured to process the UX element.

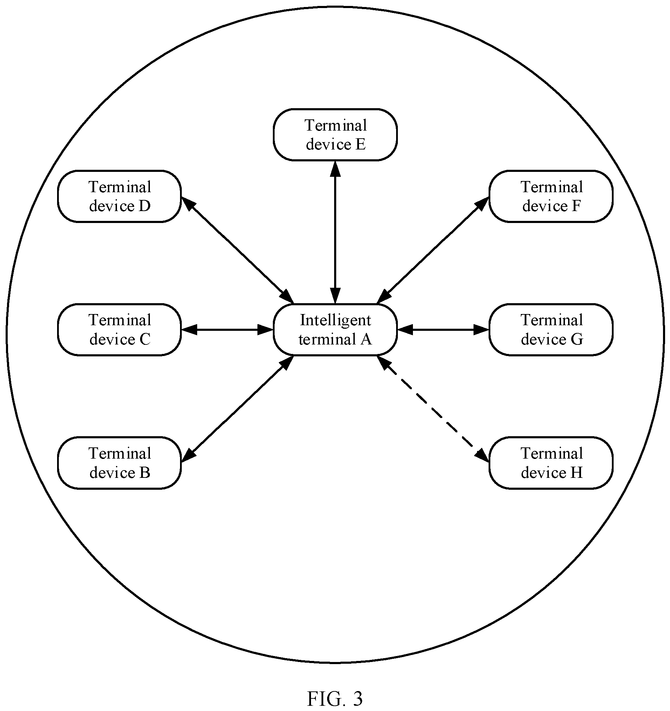

With reference to FIG. 3, the following describes, by using an example, a service scenario applicable to the technical solutions provided in embodiments of this application.

FIG. 3 is a schematic diagram of the service scenario applicable to the technical solutions provided in embodiments of this application. As shown in FIG. 3, any terminal device A may establish a communication connection to at least one other terminal device, for example, establish a communication connection to a terminal device B, a terminal device C, a terminal device D, a terminal device E, a terminal device F, or a terminal device G. When communication modules configured for the terminal device A, the terminal device B, the terminal device C, the terminal device D, the terminal device E, the terminal device F, and the terminal device G all include a Bluetooth (Bluetooth, BLE) module, the terminal device A and the terminal device B, the terminal device C, the terminal device D, the terminal device E, the terminal device F, and the terminal device G may discover each other by using the BLE module and establish a Wi-Fi peer-to-peer (peer-to-peer, P2P) connection. Alternatively, the terminal device A, the terminal device B, the terminal device C, the terminal device D, the terminal device E, the terminal device F, and the terminal device G may be connected to a same access point (access point, AP). In other words, the terminal device A, the terminal device B, the terminal device C, the terminal device D, the terminal device E, the terminal device F, and the terminal device G are all located in a same local area network. An Internet Protocol (internet protocol, IP)-based communication connection may be established between the terminal device A and the terminal device B, the terminal device C, the terminal device D, the terminal device E, the terminal device F, and the terminal device G.

In this embodiment of this application, a first terminal device may determine an allocation policy for at least two UX elements based on device information of at least two second terminal devices that have established communication connections to the first terminal device and UX information of the at least two UX elements.

For example, the terminal device A may determine an allocation policy for at least two UX elements based on device information of the terminal device B, the terminal device C, the terminal device D, the terminal device E, the terminal device F, and the terminal device G that have established communication connections to the terminal device A, and respective UX information of the at least two UX elements included in a task object of a target task. Then, for any UX element in the at least two UX elements, the terminal device A may provide, according to the allocation policy, the UX element for a terminal device configured to process the UX element. In other words, for any terminal device in the terminal device B, the terminal device C, the terminal device D, the terminal device E, the terminal device F, and the terminal device G, the terminal device A may provide, according to the allocation policy, a UX element that needs to be processed by the terminal device. In this way, the terminal device B, the terminal device C, the terminal device D, the terminal device E, the terminal device F, and the terminal device G that have established the communication connections to the terminal device A may perform service processing on respective UX elements provided by the terminal device A, so that the terminal device B, the terminal device C, the terminal device D, the terminal device E, the terminal device F, and the terminal device G perform distributed processing on the UX elements of the target task. Therefore, a user experience is improved.

It may be understood that the first terminal device may alternatively determine the allocation policy for the at least two UX elements based on device information of the first terminal device, the device information of the at least two second terminal devices that have established the communication connections to the first terminal device, and the UX information of the at least two UX information. For example, the terminal device A may determine the allocation policy for the at least two UX elements based on device information of the terminal device A, the device information of the terminal device B, the terminal device C, the terminal device D, the terminal device E, the terminal device F, and the terminal device G that have established communication connections to the terminal device A, and the UX information of the at least two UX elements included in the task object of the target task.

In a possible service scenario, the target task may be a new task to be executed. When there is a new task to be executed, the first terminal device may determine the allocation policy for the at least two UX elements based on the device information of the at least two second terminal devices that have established the communication connections to the first terminal device and the UX information of the at least two UX elements. For example, when the terminal device A has a new task to be executed, the terminal device A may determine the allocation policy for the at least two UX elements based on the device information of the terminal device B, the terminal device C, the terminal device D, the terminal device E, the terminal device F, and the terminal device G, and the UX information of the at least two UX elements included in a task object of the new task.

In a possible service scenario, the target task may be a task being executed. In a process in which the at least two second terminal devices perform distributed processing on the at least two UX elements included in the task object of the target task, if another second terminal device establishes a communication connection to the first terminal device, the first terminal device re-determines an allocation policy for the at least two UX elements based on the device information of the at least two second terminal devices that have established the communication connections to the first terminal device, and the UX information of the at least two UX elements.

For example, in a process in which the terminal device B, the terminal device C, the terminal device D, the terminal device E, the terminal device F, and the terminal device G perform distributed processing on the UX elements of the target task, if a new terminal device H establishes a communication connection to the terminal device A, the terminal device A may determine an allocation policy for the at least two UX elements based on device information of the terminal device B, the terminal device C, the terminal device D, the terminal device E, the terminal device F, the terminal device G, and the terminal device H, and the UX information of the at least two UX elements included in the task object of the target task. Correspondingly, the target task may be a task being executed. In a process in which the at least two second terminal devices perform distributed processing on the at least two UX elements included in the task object of the target task, if one of the second terminal devices disconnects from the first terminal device, the first terminal device re-determines an allocation policy for the at least two UX elements based on device information of others in the at least two second terminal devices that still maintain the communication connections to the first terminal device and the UX information of the at least two UX elements.

In a possible service scenario, the target task may be a task being executed. In a process in which the at least two second terminal devices perform distributed processing on the at least two UX elements included in the task object of the target task, if one or more of second terminal devices update device information, for example, UX preference information, and send updated device information to the first terminal device, the first terminal device may re-determine an allocation policy for the at least two UX elements based on the updated device information of the at least two second terminal devices that have established the communication connections to the first terminal device, and the UX information of the at least two UX elements.

For example, in a process in which the terminal device B, the terminal device C, the terminal device D, the terminal device E, the terminal device F, and the terminal device G perform distributed processing on the UX elements of the target task, if the terminal device A receives device information from one or more of the terminal device B, the terminal device C, the terminal device D, the terminal device E, the terminal device F, and the terminal device G, the terminal device A may re-determine an allocation policy for the at least two UX elements based on the device information of the terminal device B, the terminal device C, the terminal device D, the terminal device E, the terminal device F, and the terminal device G, and the UX information of the at least two UX elements included in the task object of the target task.

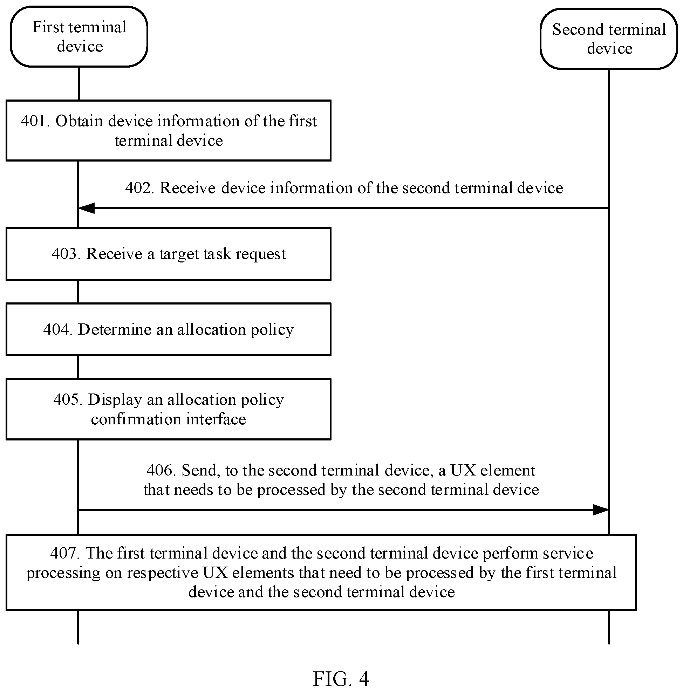

FIG. 4 is a schematic flowchart of a method for distributed processing of a UX element according to an embodiment of this application.

For ease of descriptions, a terminal device that performs steps in FIG. 4 is referred to as a first terminal device herein, and a terminal device that establishes a communication connection to the first terminal device is referred to as a second terminal device. The first terminal device may independently execute a target task. In addition, for at least one UX element of the target task, the first terminal device may provide each UX element for a corresponding second terminal device according to an allocation policy determined by the first terminal device. Alternatively, the first terminal device may not be used for distributed processing on the UX element of the target task. In addition, for the at least one UX element of the target task, the first terminal device may provide each UX element for the corresponding second terminal device according to the allocation policy determined by the first terminal device. Alternatively, the first terminal device may be used for distributed processing on the UX elements of the target task, that is, the first terminal may perform, according to the allocation policy determined by the first terminal, service processing on a UX element that is in the plurality of UX elements of the target task and that is associated with the first terminal device. In the embodiment shown in FIG. 4, an example in which the first terminal device is used for distributed processing on the UX elements of the target task is used to describe the technical solution provided in this embodiment of this application. First, in step 401, the first terminal device obtains device information of the first terminal device.

The device information of the first terminal device includes at least UX capability information of the first terminal device.

In a possible implementation, the device information of the first terminal device further includes screen information of the first terminal device, that is, includes a height and a width of a display screen configured for the first terminal device.

In a possible implementation, the device information of the first terminal device further includes user information of the first terminal device. The user information indicates whether one or more users have permission to access the first terminal device.

In a specific example, the user information of the first terminal device may include one or more user identifiers and a keyword associated with the user identifier. If a value of a keyword associated with a user identifier is 1, it indicates that a user indicated by the user identifier has permission to access the first terminal device. If a value of a keyword associated with a user identifier is 0, it indicates that a user indicated by the user identifier does not have permission to access the first terminal device.

In a specific example, the user information of the first terminal device may include one or more user identifiers, and all users indicated by the one or more user identifiers have permission to access the first terminal device.

In a possible implementation, the device information of the first terminal device further includes UX preference information of the first terminal device.

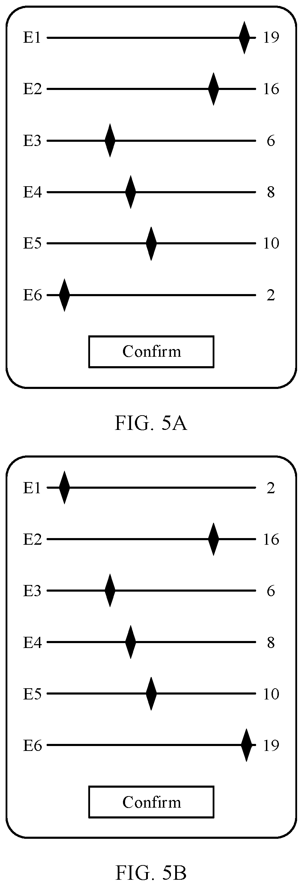

In a specific example, the first terminal device may display a UX preference management interface to the user through the display screen configured for the first terminal device; and determine the UX preference information of the first terminal device in response to a service operation performed by the user on the UX preference management interface. For example, the first terminal device may display a UX preference management interface shown in FIG. 5A to the user. As shown in FIG. 5A, the UX preference management interface includes six categories such as E1, E2, E3, E4, E5 and E6 that are used to indicate UX categories, and pattern combinations that are in one-to-one correspondences with the UX categories. One pattern combination includes one straight line pattern and one diamond pattern. For one pattern combination, the user may adjust, by adjusting a position of the diamond pattern on the straight line pattern, a UX preference corresponding to the pattern combination. It is assumed that the user of the first terminal device expects that a UX element in E1 is allocated to the first terminal device, and then the first terminal device performs service processing on the UX element in E1, and the user expects that a UX element in E6 is allocated to one or more second terminal devices as much as possible. The user may drag, in a pattern combination on the right side of E1, a diamond pattern towards the right side of a straight line pattern to increase a UX preference of the first terminal device for the UX element in E1; and drag, in a pattern combination on the right side of E6, a diamond pattern towards the left side of a straight line pattern to reduce a UX preference of the first terminal device for the UX element in E6. Herein, an example is used, in which the user adjusts the pattern combination on the right side of E1 and the pattern combination on the right side of E6 on the graphical user interface shown in FIG. 5A, so that the first terminal device displays a graphical user interface shown in FIG. 5B, and the user triggers (for example, touches/presses) an area in which a word "confirm" is located on the graphical user interface shown in FIG. 5B. The first terminal device may determine the UX preference of the first terminal device based on a service operation such as a drag operation performed by the user on the diamond pattern and a trigger operation performed on the area in which the word "confirm" is located. As shown in FIG. 5B, in UX preferences determined by the first terminal device, a UX preference corresponding to E1 is 2, a UX preference corresponding to E2 is 16, a UX preference corresponding to E3 is 6, a UX preference corresponding to E4 is 8, a UX preference corresponding to E5 is 10, and a UX preference corresponding to E6 is 19. It may be understood that the UX preference management interfaces shown in FIG. 5A and FIG. 5B are merely used for describing the technical solutions of this application. In an actual service scenario, the UX preference management interface may be designed in another manner, and words such as E1, E2, E3, E4, E5, and E6 may be replaced by real category identifiers.

It should be noted that if the first terminal device is not used for executing the target task, that is, the first terminal device is not configured to perform service processing on any UX element of the target task, the first terminal device may not perform step 401; or if the first terminal device independently executes the target task, that is, the first terminal device is configured to perform service processing on each UX element of the target task, the first terminal device may not perform step 401.

In step 402, the first terminal device receives device information of at least one second terminal device from the at least one second terminal device.

In a possible implementation, for any second terminal device, after establishing a communication connection to the first terminal device, the second terminal device may first send device information of the second terminal device to the first terminal device.

The device information of the second terminal device includes at least UX capability information of the second terminal device.

In a possible implementation, the device information of the second terminal device further includes screen information of the second terminal device when a display screen is configured for the second terminal device.

In a possible implementation, the device information of the second terminal device further includes UX preference information of the second terminal device. The second terminal device may obtain the UX preference information of the second terminal device in a manner the same as or similar to that of the first terminal device.

In a possible implementation, the device information of the second terminal device further includes user information of the second terminal device.

Step 403. The first terminal device receives a target task request.

The target task request is used to request to perform processing on at least two UX elements. The at least two UX elements may be UX elements included in a task object of the target task. The target task request includes UX information of the at least two UX elements. A target task corresponding to the target task request may be a new task to be executed, or may be a task being executed independently by the first terminal device, or may be a task being executed collaboratively by the first terminal device and at least one second terminal device. This is not limited herein. In a possible implementation, the first terminal device may parse the task object of the target task to obtain the at least two UX elements of the target task.

For example, if the target task is to play a "video", the first terminal device may parse a source file of the "video", to obtain a "video file" used to support the terminal device in displaying image information of the "video" to the user, and obtain an "audio file" used to support the terminal device in providing sound information of the "video" to the user. The "audio file" and the "video file" are two UX elements of the target task.

For example, if the target task is to display a graphical user interface, the first terminal device may divide the graphical user interface to obtain at least one image area based on content displayed on the graphical user interface, to parse a source file corresponding to the graphical user interface, so as to obtain at least one executable subfile used to support the terminal device in displaying each image area to the user. The executable subfile is the UX element of the target task.

The target task request includes the UX information of the at least two UX elements. UX information of a UX element includes at least UX requirement information of the UX element.

In a possible implementation, the UX information of the UX element further includes user permission of the UX element. The user permission indicates whether one or more users have permission to interact with the UX element. In a specific example, the user permission of the UX element may include one or more user identifiers and a keyword associated with the user identifier. If a value of a keyword associated with a user identifier is 1, it indicates that a user indicated by the user identifier has permission to interact with the UX element. If a value of a keyword associated with a user identifier is 0, it indicates that a user indicated by the user identifier does not have permission to interact with the UX element.

In a specific example, the user permission of the UX element may include one or more user identifiers, and all users indicated by the one or more user identifiers have permission to interact with the UX element.

In a possible implementation, if achievement of a service objective of a UX element needs support from an interaction manner of "image display", UX information of the UX element may further include screen requirement information of the UX element. The screen requirement information indicates a minimum height, a minimum width, a maximum height, and a maximum width that a UI element of the UX element has when the UI element is displayed on the display screen of the terminal device.

Step 404. The first terminal device determines the allocation policy based on at least the UX capability information of the first terminal device, the UX capability information of at least one second terminal device, and UX requirement information of the at least two UX elements.

The allocation policy indicates at least an UX element that needs to be processed by each of the first terminal device and at least one second terminal device, and the UX element that needs to be processed is the UX element in the at least two UX elements.

In a possible implementation, for any UX element in the at least two UX elements, any one of the first terminal device and at least one second terminal device may calculate, based on UX requirement information of the UX element and UX capability information of the terminal device, a user experience degree of the terminal device brought by the UX element when service processing is performed on the UX element by using the terminal device. Then, it is determined, based on the user experience degree of the terminal device brought by the UX element, whether the UX element is the UX element that needs to be processed by the terminal device. Then the allocation policy is obtained.

In a specific example, a dot product of a feature vector indicating UX requirement information of a UX element and a feature vector indicating UX capability information of a terminal device may be determined as the user experience degree of the terminal device brought by the UX element.

In a specific example, for any terminal device in the first terminal device and the at least one second terminal device, if a user experience degree of the terminal device brought by a UX element is large (for example, greater than a preset value), the any terminal device may be determined as a terminal device configured to perform service processing on the UX element, that is, the UX element is determined as a UX element that needs to be processed by the any terminal device. In other words, the allocation policy may indicate that the UX element is the UX element that needs to be processed by the any terminal device.

In a possible implementation, comprehensive analysis may be performed on the device information of the first terminal device, the device information of the at least one second terminal device, and the UX information of the at least two UX elements by using a preconfigured decision engine, and the allocation policy is generated based on an analysis result.

The decision engine includes a dynamic recommendation algorithm model, and the dynamic recommendation algorithm model may include a target function and one or more constraints. The decision engine may be further configured to search for an optimal solution of the target function based on the constraints, to obtain a decision variable used to generate the recommendation policy. The decision variable indicates whether a terminal device is associated with a UX element, that is, indicates whether a UX element is a UX element that needs to be processed by a terminal device.

In a possible implementation, the target function F may include:

$$\left\{\begin{array}{l} F = \max\left(W_q * Q + W_c * C\right); \\[2mm] Q = \sum_{i=1}^{e} \sum_{j=1}^{d} C_{ij} * P_{ij} * S_{ij}; \\[2mm] C_{ij} = V_i * U_j; \\[2mm] C = \sum_{i=1}^{e} O_i + R_{min}; \\[2mm] R = \dfrac{\sum_{i=1}^{e} O_i}{\sum_{i=1}^{e} P_i}; \\[2mm] O_i = 1, \text{if } \sum_{j=1}^{d} a_j * X_{ij} > 0; \\[2mm] O_i = 0, \text{if } \sum_{j=1}^{d} a_j * X_{ij} \le 0; \\[2mm] O_i \le 1, \text{and } O_i \le \sum_{j=1}^{d} a_j * X_{ij}; \\[2mm] R_{min} \ge 0 \text{ and } R_{min} \le R. \end{array}\right.$$

$W_q$ and $W_c$ are weight coefficients.

A feature vector $V_i$ is used to indicate UX requirement information of the $i^{th}$ UX element. For example, it is assumed that in a UX requirement of the $i^{th}$ UX element, a UX parameter corresponding to an interaction manner "image display" is X1, a UX parameter corresponding to an interaction manner "audio playing" is X2, a UX parameter corresponding to an interaction manner "text input" is X3, a UX parameter corresponding to an interaction manner "touch control" is X4, and a UX parameter corresponding to an interaction manner "sound input" is X5. In this case, the feature vector $V_i$ used to indicate the UX requirement information of the $i^{th}$ UX element is equal to [X1, X2, X3, X4, X5]. It may be understood that X1, X2, X3, X4, and X5 are merely used for describing the technical solution in this embodiment of this application, and may be replaced with corresponding real values in an actual service scenario. A feature vector $U_j$ is used to indicate UX capability information of the $j^{th}$ terminal device. For example, it is assumed that in a UX capability of the $j^{th}$ terminal device, a UX parameter corresponding to the interaction manner "image display" is Y1, a UX parameter corresponding to the interaction manner "audio playing" is Y2, a UX parameter corresponding to the interaction manner "text input" is Y3, a UX parameter corresponding to the interaction manner "touch control" is Y4, and a UX parameter corresponding to the interaction manner "sound input" is Y5. In this case, the feature vector $U_j$ used to indicate the UX capability information of the $j^{th}$ terminal device is equal to [Y1, Y2, Y3, Y4, Y5]. It may be understood that Y1, Y2, Y3, Y4, and Y5 are merely used for describing the technical solution in this embodiment of this application, and may be replaced with corresponding real values in an actual service scenario.

$C_{ij}$ is a dot product of the feature vector $V_i$ and the feature vector $U_j$, and is used to indicate a user experience degree of the $j^{th}$ terminal device brought by the $i^{th}$ UX element. For example, if the feature vector $V_i$ = [X1, X2, X3, X4, X5], and the feature vector $U_j$ = [Y1, Y2, Y3, Y4, Y5], $C_{ij}$ = X1 * Y1 + X2 * Y2 + X3 * Y3 + X4 * Y4 + X5 * Y5. $P_{ij}$ is used to indicate preference information of the $j^{th}$ terminal device for the $i^{th}$ UX element.

In the UX requirement of the $i^{th}$ UX element, if a UX parameter corresponding to the interaction manner "image display" is not 0, $S_{ij}$ is used to indicate an area occupied by a UI element corresponding to the $i^{th}$ UX element on a display screen of the $j^{th}$ terminal device on which the UI element is displayed. In the UX requirement of the $i^{th}$ UX element, if the UX parameter corresponding to the interaction manner "image display" is 0, a value of $S_{ij}$ is 1.

$S_{ij} = W_{ij} * H_{ij}$. $W_{ij}$ is a continuous variable, and indicates a width that the UI element corresponding to the $i^{th}$ UX element has on the display screen of the $j^{th}$ terminal device when the UI element is displayed on the display screen. $H_{ij}$ is a continuous variable, and indicates a height that the UI element corresponding to the $i^{th}$ UX element has on the display screen of the $j^{th}$ terminal device when the UI element is displayed on the display screen.

$P_i$ indicates whether a user has permission to interact with the $i^{th}$ UX element, and a value of $P_i$ is 0 or 1. When the value of $P_i$ is 0, it indicates that the user does not have the permission to interact with the $i^{th}$ UX element; and when the value of $P_i$ is 1, it indicates that the user has the permission to interact with the $i^{th}$ UX element.

In the target function, $a_j$ indicates whether the user has permission to access the $j^{th}$ terminal device, and a value of $a_j$ is 0 or 1. When the value of $a_j$ is 0, it indicates that the user does not have the permission to access the $j^{th}$ terminal device; or when the value of $a_j$ is 1, it indicates that the user has the permission to access the $j^{th}$ device.

When a value of $O_i$ is 1, it indicates that the user has the permission to interact with the $i^{th}$ UX element, and the user may exchange information with the $i^{th}$ UX element by using at least one terminal device. In other words, in the at least one terminal device associated with the $i^{th}$ UX element, the user has permission to access at least one of the terminal devices. When the value of $O_i$ is 0, it indicates that when the user has the permission to interact with the $i^{th}$ UX element, the user cannot exchange information with the $i^{th}$ UX element by using at least one terminal device. In other words, in the at least one terminal device associated with the $i^{th}$ UX element, the user does not have permission to access any terminal device.

R is used to indicate a proportion at which the user successfully interacts with, by using a terminal device that the user can access, at least one UX element when e UX elements are allocated to d terminal devices according to a corresponding allocation policy, if the user has permission to interact with at least one UX element.

$R_{min}$ is used to indicate a minimum element coverage rate by one user when the e UX elements are allocated to the d terminal devices according to the corresponding allocation policy, where a value of $R_{min}$ is greater than 0 and less than R.

$X_{ij}$ is a decision variable, and a value of $X_{ij}$ is 0 or 1. When the value of $X_{ij}$ is 0, it indicates that the $i^{th}$ UX element is not associated with the $j^{th}$ terminal device. When the value of $X_{ij}$ is 1, it indicates that the $i^{th}$ UX element is associated with the $j^{th}$ terminal device. In other words, $i * j$ decision variables $X_{ij}$ determined by the decision engine indicate association relationships between the e UX elements and the d terminal devices, and the allocation policy may be obtained based on the $i * j$ decision variables $X_{ij}$ obtained by the decision engine.

It should be noted that, in the foregoing target function, a data item $W_c * C$ corresponds to one user. If m (m is greater than 1) users have permission to interact with one or more UX elements of the target task, the data item $W_c * C$ should be replaced with a sum of data items $W_c * C$ respectively corresponding to the m users.

It may be understood that, in the target function F, if a value of a data item $W_q * Q$ is large, the first terminal device allocates UX elements of the target task to the first terminal device and at least one second terminal device according to a corresponding allocation policy. When the first terminal device and the at least one second terminal device perform distributed processing on the UX elements of the target task, a better user experience is provided. If a value of a data item $W_c * C$ corresponding to one user is larger, or a sum of data items $W_c * C$ respectively corresponding to at least two users is larger, when the first terminal device allocates the UX elements of the target task to the first terminal device and the at least one second terminal device according to the corresponding allocation policy, for any UX element, one or more users having permission to interact with the UX element are more likely to successfully interact with the UX element by using a corresponding terminal device. In other words, a larger value of the data item $W_c * C$ corresponding to one user or a larger sum of the data items $W_c * C$ respectively corresponding to at least two users indicates a higher completion degree of the target task, that is, a higher probability that each UX element of the target task achieves a service objective.

In a possible implementation, the dynamic recommendation algorithm model includes one or more of an element region constraint, a device capacity constraint, an element authorization constraint, a device availability constraint, and zero constraint.

In a specific example, the element region constraint includes:

$$\begin{cases} S_{ij} = 0, \text{if } X_{ij} = 0; \\ S_i^{min} \le S_{ij} \le \min\left(S_i^{max}, S_j\right), \text{if } X_{ij} = 1. \end{cases}$$

$S_i^{min}$ is used to indicate a minimum area occupied by the UI element corresponding to the $i^{th}$ UX element on a display screen of the $j^{th}$ terminal device when the $i^{th}$ UX element needs support from the interaction manner of "image display" to achieve a service objective of the $i^{th}$ UX element, and the decision variable $X_{ij}$ = 1. $S_i^{max}$ indicates a maximum area occupied by the UI element corresponding to the $i^{th}$ UX element on the display screen of the $j^{th}$ terminal device when the $i^{th}$ UX element needs support from the interaction manner of "image display" to achieve the service objective of the $i^{th}$ UX element, and the decision variable $X_{ij}$ = 1.

$S_j$ indicates an area of the display screen of the $j^{th}$ terminal device.

In a specific example, the device capacity constraint includes:

$$\begin{cases} S_{ij} \leq mX_{ij}; \\ \sum_{i=1}^{e} S_{ij} \leq W_j * H_j \\ W_i^{min} * X_{ij} \leq W_j; \\ H_i^{min} * X_{ij} \leq H_j. \end{cases}$$

In the constraint, m is a constant.

$W_j$ indicates a width of the display screen of the $j^{th}$ terminal device.

$H_j$ indicates a height of the display screen of the $j^{th}$ terminal device. $W_i^{min}$ indicates a minimum width required by the UI element corresponding to the $i^{th}$ UX element on the display screen of the $j^{th}$ terminal device when the $i^{th}$ UX element needs support from the interaction manner of "image display" to achieve the service objective of the $i^{th}$ UX element. $H_i^{min}$ indicates a minimum height required by the UI element corresponding to the $i^{th}$ UX element on the display screen of the $j^{th}$ terminal device when the $i^{th}$ UX element needs support from the interaction manner of "image display" to achieve the service objective of the $i^{th}$ UX element.

In a specific example, the element authorization constraint includes:

$$X_{ij} = 0, \text{ if } a_j > P_i.$$

In a specific example, the device reachability constraint includes:

$$X_{ij} \leq a_j.$$

In a specific example, the zero constraint includes:

$$\begin{cases} X_{ij} = 0, \text{if } C_{ij} = 0; \\ X_{ij} = 0, \text{if } P_{ij} = 0. \end{cases}$$

It may be understood that the dynamic recommendation algorithm model may further include another constraint other than the foregoing example constraints. For example, a constraint may be further included:

$$\begin{cases} W_{ij} \leq W_i^{max}; \\ H_{ij} \leq H_i^{max}. \end{cases}$$

$W_i^{max}$ indicates a maximum width required by the UI element corresponding to the $i^{th}$ UX element on the display screen of the terminal device when the $i^{th}$ UX element needs support from the interaction manner of "image display" to achieve the service objective of the $i^{th}$ UX element. $H_i^{max}$ indicates a maximum height required by the UI element corresponding to the $i^{th}$ UX element on the display screen of the terminal device when the $i^{th}$ UX element needs support from the interaction manner of "image display" to achieve the service objective of the $i^{th}$ UX element.

It may be understood that the optimal solution of the target function F includes the value of the decision variable $X_{ij}$, and the values of continuous variables $W_{ij}$ and $H_{ij}$. Correspondingly, the value of the decision variable indicates an association relationship between the first terminal device, at least one second terminal device, and at least one UX element. Therefore, the allocation policy may be generated based on the value of the decision variable $X_{ij}$.

Step 405. The first terminal device displays an allocation policy confirmation interface.

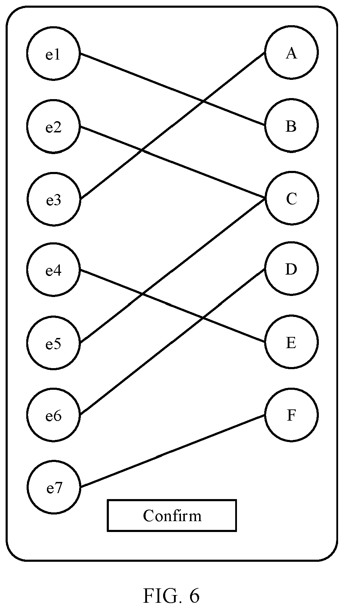

For example, it is assumed that the task object of the target task includes UX elements e1, e2, e3, e4, e5, e6, and e7, the first terminal device is a terminal device A, and the at least one second terminal device includes a terminal device B, a terminal device C, a terminal device D, a terminal device E, and a terminal device F. In the optimal solution of the target function F, a value of a decision variable $X_{12}$ corresponding to the first UX element e1 and the second terminal device B is 1; a value of a decision variable $X_{23}$ corresponding to the second UX element e2 and the third terminal device C is 1; a value of a decision variable $X_{31}$ corresponding to the third UX element e3 and the first terminal device A is 1; a value of a decision variable $X_{45}$ corresponding to the fourth UX element e4 and the fifth terminal device E is 1; a value of a decision variable $X_{45}$ corresponding to the fifth UX element e5 and the third terminal device C is 1; a value of a decision variable $X_{64}$ corresponding to the sixth UX element e6 and the fourth terminal device D is 1; and a value of a decision variable $X_{76}$ corresponding to the seventh UX element e7 and the sixth terminal device F is 1. In addition, in the optimal solution of the target function F, values of other decision variables are all 0. In this case, the terminal device A may display the corresponding allocation policy to the user through an allocation policy confirmation interface shown in FIG. 6.

As shown in FIG. 6, e1 is associated with the terminal device C, and may indicate that a UX element that needs to be processed by the terminal device C includes e1; e2 is associated with the terminal device B, and may indicate that a UX element that needs to be processed by the terminal device B includes e2; e3 is associated with the terminal device A, and may indicate that a UX element that needs to be processed by the terminal device A includes e3; e4 is associated with the terminal device E, and may indicate that a UX element that needs to be processed by the terminal device E includes e4; e5 is associated with the terminal device C, and may indicate that a UX element that needs to be processed by the terminal device C includes e5; e6 is associated with the terminal device D, and may indicate that a UX element that needs to be processed by the terminal device D includes e5; and e7 is associated with the terminal device F, and may indicate that a UX element that needs to be processed by the terminal device F includes e7.

Correspondingly, the user may perform a confirmation operation on the allocation policy on the allocation policy confirmation interface displayed by the terminal device.

For example, the user may trigger (for example, touch or press) an area in which a word "confirm" is located in the allocation policy confirmation interface shown in FIG. 6, to complete confirmation of the allocation policy indicated by the graphical user interface. When receiving a confirmation operation, the terminal device further performs the following step 406. If the user does not trigger an area in which the word "confirm" in the graphical user interface is located, and therefore the first terminal device does not receive the confirmation operation of the user, the first terminal device may perform another operation. For example, step 404 is performed again to determine an allocation policy that is not completely the same as the allocation policy indicated by the graphical interface, and/or to update a customized rule input by the user.

It may be understood that the first terminal device may further provide the allocation policy for the at least one second terminal device, so that a user of each second terminal device confirms the allocation policy. Correspondingly, the first terminal device may perform the following step 406 only after the user of the at least one second terminal device confirms the allocation policy.

To be specific, in step 406, the first terminal device sends, to each second terminal device according to the allocation policy, the UX element that needs to be processed by the second terminal device.

The allocation policy confirmation interface shown in FIG. 6 is still used as an example. The terminal device A may send e1 to the terminal device B, send e2 and e5 to the terminal device C, send e6 to the terminal device D, send e4 to the terminal device E, and send e7 to the terminal device F.

As described above, the values of $W_{ij}$ and $H_{ij}$ obtained by the decision engine indicate the height and the width of the UI element of the $i^{th}$ UX element on the display screen of the $H_{ij}^{th}$ terminal device when the UI element is displayed on the display screen. Therefore, in a possible implementation, for any UX element, the first terminal device may further send, to the second terminal device, a height and a width that the UI element of the UX element to be processed by the second terminal device has when the UI element is displayed on the display screen of the second terminal device.

Then, in step 407, the first terminal device and the at least one second terminal device perform service processing on the UX elements that need to be processed respectively by the first terminal device and the at least one second terminal device.

The allocation policy confirmation interface shown in FIG. 6 is still used as an example. The terminal device A may perform service processing on e3 that needs to be processed by the terminal device A, the terminal device B may perform service processing on e1 that needs to be processed by the terminal device B, the terminal device C may perform service processing on e2 and e5 that need to be processed by the terminal device C, the terminal device D may perform service processing on e6 that needs to be processed by the terminal device D, the terminal device E may perform service processing on e4 that needs to be processed by the terminal device E, and the terminal device F may perform service processing on e7 that needs to be processed by the terminal device F. In this way, the terminal device A, the terminal device B, the terminal device C, the terminal device D, the terminal device E, and the terminal device F can perform distributed processing on the UX elements of the target task, and therefore a user experience is improved. As described above, the UX element is an executable file. Therefore, when performing service processing on the UX element that needs to be processed by the terminal device, the terminal device essentially executes a corresponding file, to achieve a service objective of the UX element. For example, a UX element is an "audio file". When service processing is performed on the "audio file" by a smart sound box, the smart sound box may provide corresponding sound information for the user by using an audio module configured in the sound box. For example, a UX element is a "video file". When service processing is performed on the "video file" by a smart TV, the smart TV may display corresponding image information for the user by using a display screen configured for the smart TV

It should be noted that, if a second terminal device receives, from the first terminal device, a height and a width that a UI element of a UX element has when the UI element is displayed on the display screen of the second terminal device, the second terminal device may perform service processing on the UX element based on the corresponding height and width, to limit the height and the width of the UI element/graphical user interface of the UX element on the display screen.

With reference to FIG. 3, FIG. 7A, FIG. 7B-1 to FIG. 7B-3, FIG. 7C-1 to FIG. 7C-4, and FIG. 7D-1 to FIG. 7D-4, the following further describes, by using an example, the technical solutions applicable provided in embodiments of this application. Herein, an example in which a terminal device that performs the method provided in any embodiment of this application is the terminal device A is used.

First, the terminal device A may receive device information of the terminal devices B, C, D, E, F, and G.

It is assumed that a terminal device B is a smart TV or a smart screen that is shared between a user 1, a user 2, a user 3, and a user 4, in other words, user permission of the terminal device B indicates that the user 1, the user 2, the user 3, and the user 4 all have permission to access the terminal device B. The terminal device C is a mobile phone of the user 1, that is, user permission of the terminal device C indicates that the user 1 has permission to access the terminal device C. The terminal device D is a mobile phone of the user 2, that is, user permission of the terminal device D indicates that the user 2 has permission to access the terminal device D. The terminal device E is a smart watch of the user 3, that is, user permission of the terminal device E indicates that the user 3 has permission to access the terminal device E. The terminal device F is a smart sound box shared between the user 1, the user 2, the user 3, and the user 4, that is, user permission of the terminal device F indicates that the user 1, the user 2, the user 3, and the user 4 has permission to access the terminal device F. The terminal device G is a mobile phone of the user 4, that is, user permission of the terminal device G indicates that the user 4 has permission to access the terminal device G.

Then, the terminal device A obtains at least two UX elements included in the task object of the target task.

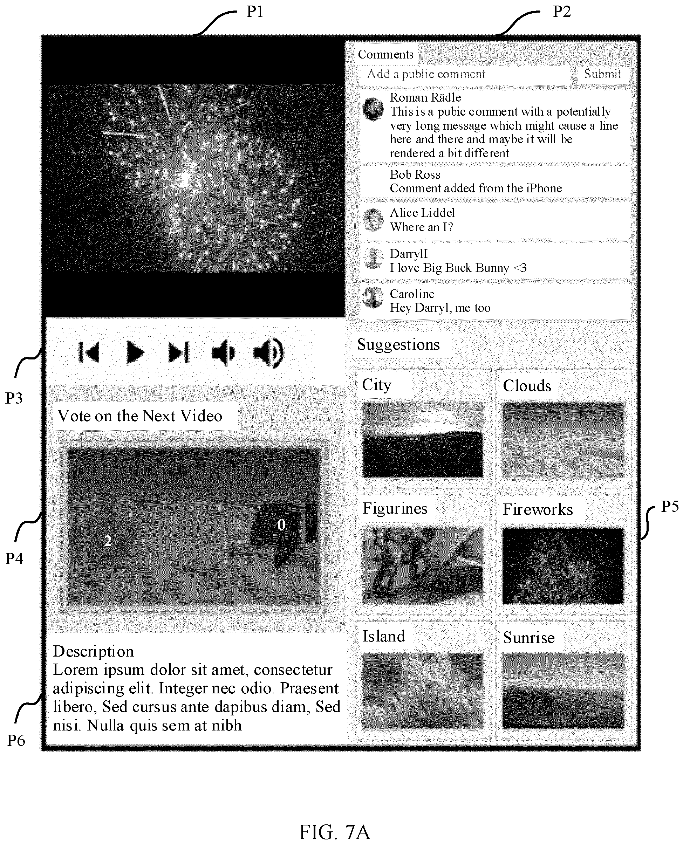

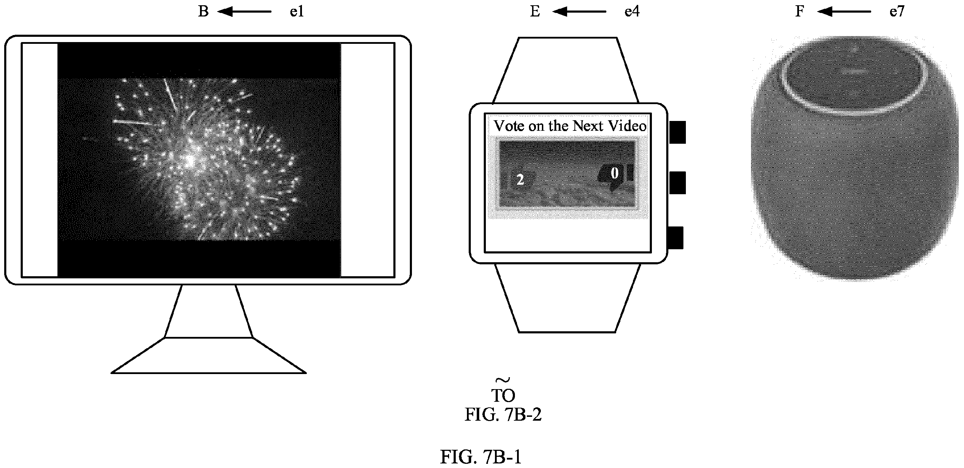

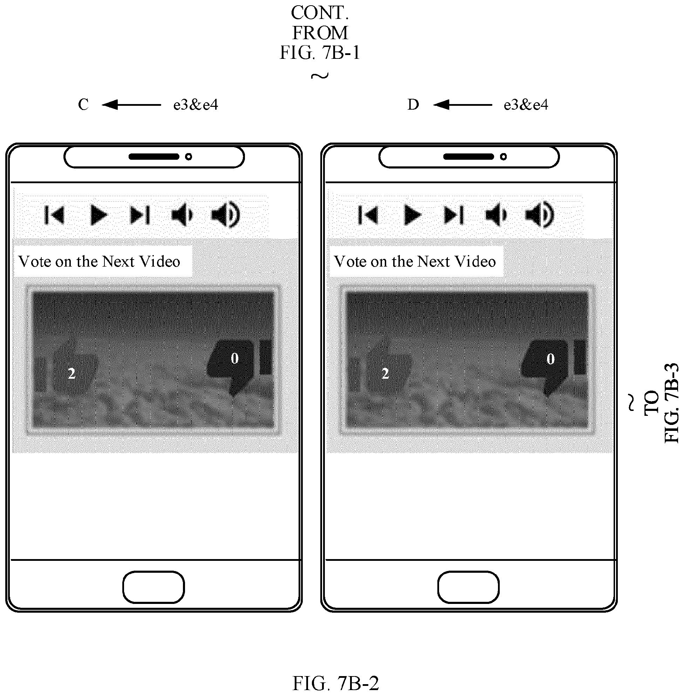

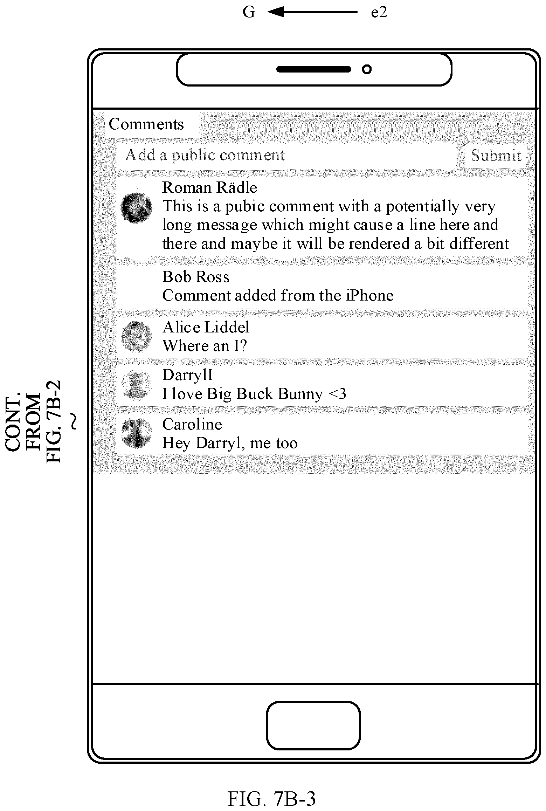

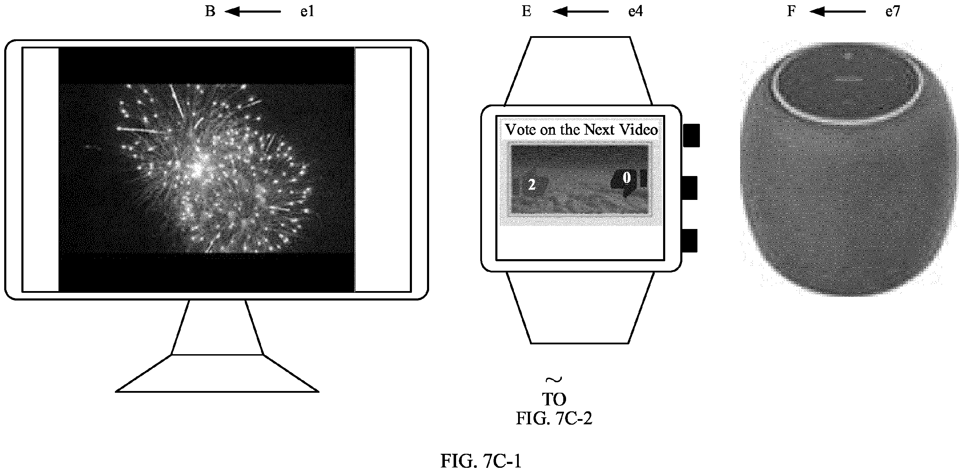

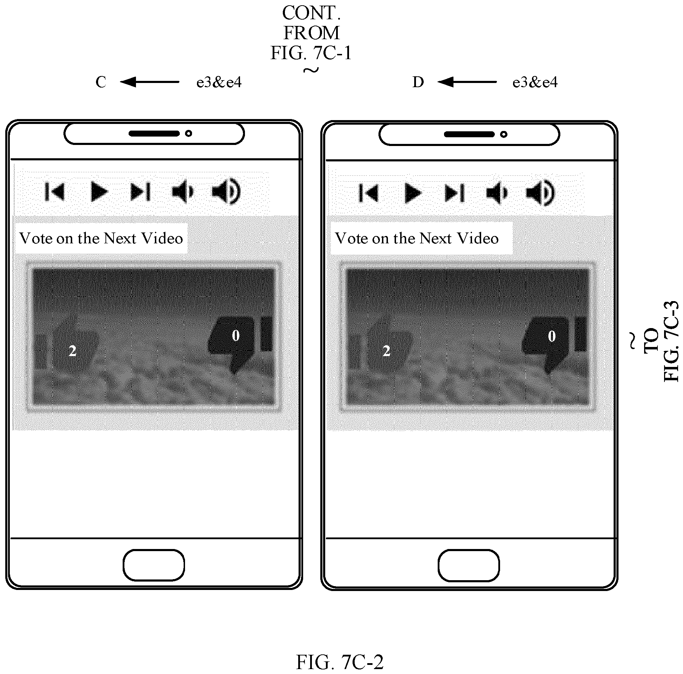

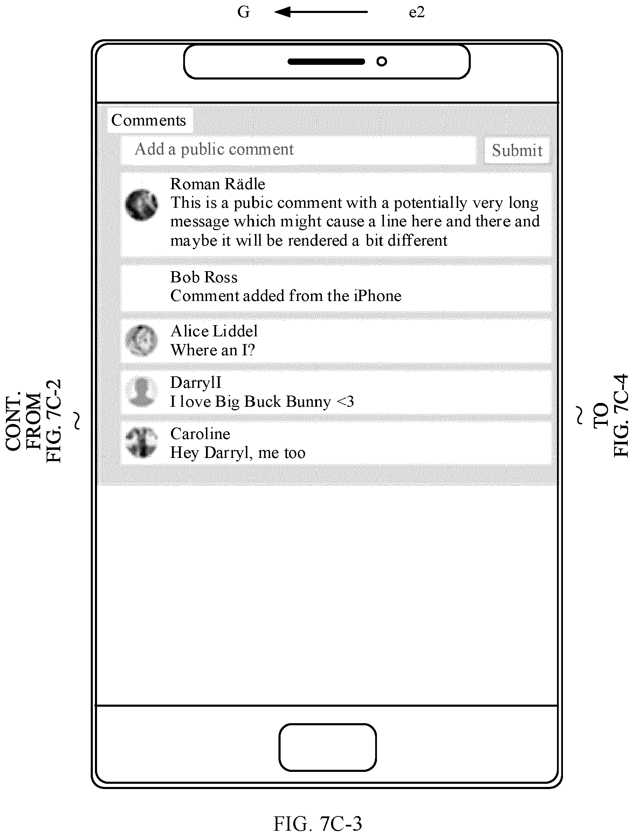

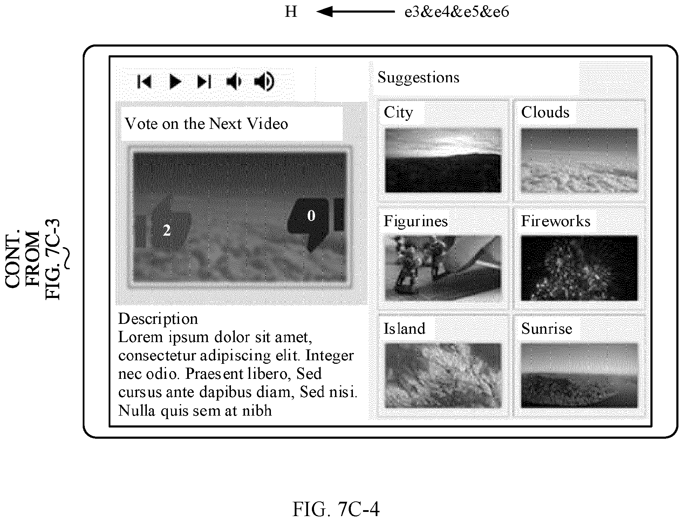

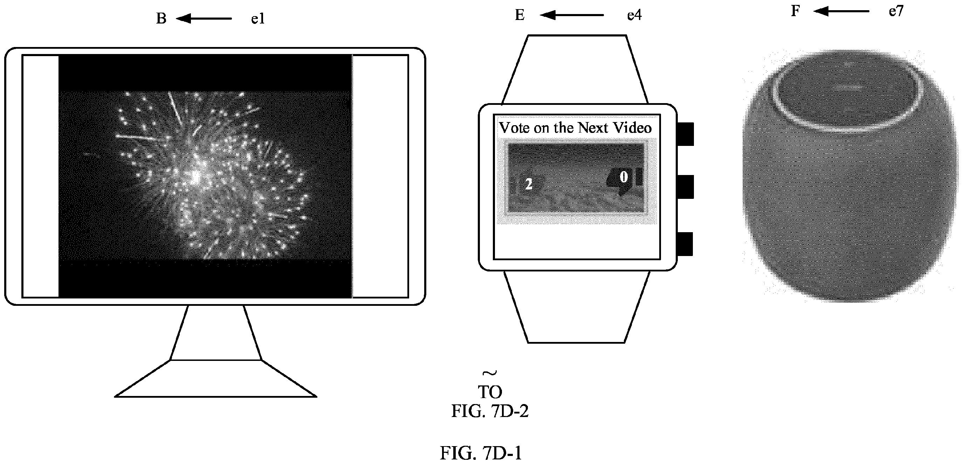

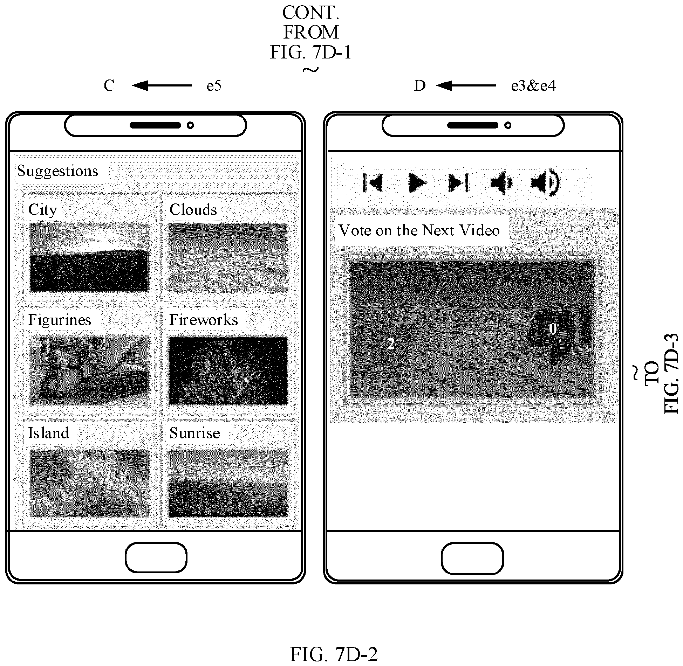

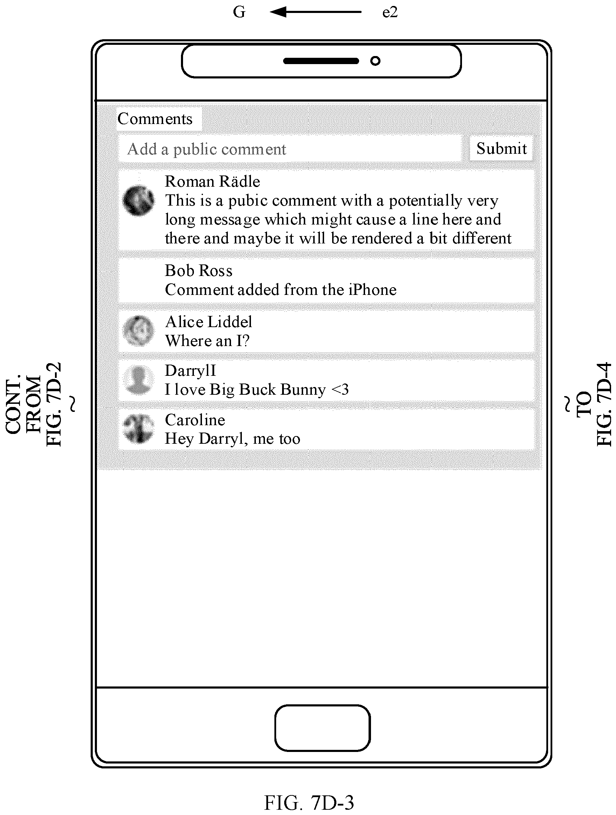

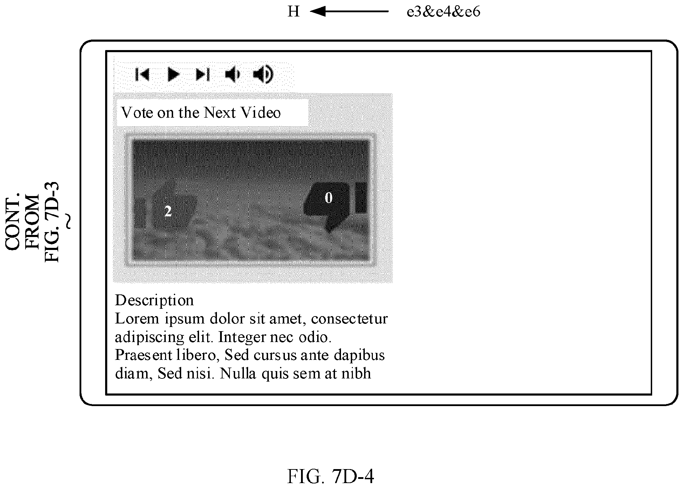

It is assumed that when the terminal device A independently executes the target task, the terminal device A displays, through a display screen configured for the terminal device A, a graphical user interface shown in FIG. 7A, and provides corresponding sound information for the user by using an audio module configured for the terminal device A. In other words, the task object of the target task may include: an executable file that is used to support the terminal device A in displaying the graphical user interface shown in FIG. 7A and that is used to support the terminal device A in providing corresponding sound information for the user by using an audio module configured for the terminal device A.

Refer to FIG. 7A. The graphical user interface includes an image area P1 displaying "fireworks (Fireworks) video (Video)", an image area P2 displaying "user comments (Comments)", an image area P3 displaying "playing control components", an image area P4 displaying a "suggested video (Suggestions)", an image area P5 displaying a "voting button", and an image area P6 displaying "description (Description)". Correspondingly, through parsing the task object of the target task, the terminal device A may obtain a UX element used to support the terminal device in displaying the image area P1, a UX element used to support the terminal device in displaying the image area P2, a UX element used to support the terminal device in displaying the image area P3, a UX element used to support the terminal device in displaying the image area P4, a UX element used to support the terminal device in displaying the image area P5, a UX element used to support the terminal device in displaying the image area P6, and a corresponding audio file. For ease of description, subsequently, e1, e2, e3, e4, e5, and e6 are used to indicate the UX elements used to support the terminal device in displaying the image areas P1, P2, P3, P4, P5, and P6, and e7 is used to indicate the corresponding audio file.

Then, the target task request is received. The target task request is used to request to process e1, e2, e3, e4, e5, e6, and e7, and the target task request includes UX information of e1, e2, e3, e4, e5, e6, and e7.

It is assumed that user permission of e1 indicates that the user 1, the user 2, the user 3, and the user 4 have permission to interact with e1; user permission of e2 indicates that the user 4 has permission to interact with e2; user permission of e3 indicates that the user 1 and the user 2 have permission to interact with e3; user permission of e4 indicates that the user 1, the user 2, and the user 3 have permission to interact with e4; user permission of e5 indicates that the user 1 and the user 2 have permission to interact with e5; user permission of e6 indicates that the user 1 and the user 2 have permission to interact with e6; and user permission of e7 indicates that the user 1, the user 2, the user 3, and the user 4 have permission to interact with e7.

Then the terminal device A determines the allocation policy according to the device information of the terminal devices B, C, D, E, F, and G, and the UX information of e1, e2, e3, e4, e5, e6, and e7.

Correspondingly, the terminal device A may send, to the terminal devices B, C, D, E, F, and G according to the allocation policy, the respective UX elements that need to be processed by the terminal devices B, C, D, E, F, and G. As described above, for e1, e2, e3, e4, e5, and e6, the terminal device A may further determine heights and widths required by respective UI elements of the terminal devices B, C, D, E, F, and G on display screens of the terminal devices configured to process e1, e2, e3, e4, e5, and e6.

It is assumed that the allocation policy indicates that the UX element that needs to be processed by the terminal device B includes e1, the UX element that needs to be processed by the terminal device C includes e3 and e4, the UX element that needs to be processed by the terminal device D includes e3 and e4, the UX element that needs to be processed by the terminal device E includes e4, the UX element that needs to be processed by the terminal device F includes e7, and the UX element that needs to be processed by the terminal device G includes e2. In this case, the terminal device A may send e1 to the terminal device B, send e3 and e4 to the terminal device C, send e3 and e4 to the terminal device D, send e4 to the terminal device E, send e7 to the terminal device F, and send e2 to the terminal device G.

It should be noted that, depending on a screen size of the display screen configured for the terminal device and/or a UX preference of the terminal device, one or more of the UX elements such as e1, e2, e3, e4, e5, and e6 may not be sent to another terminal device that establishes a communication connection to the terminal device A. For example, even though the user permission of e5 and e6 indicates that the user 1 and the user 2 have the permission to interact with e5 and e6, the user 1 has the permission to access the terminal device C, and the user 2 has the permission to access the terminal device D, if a UX preference of the terminal device C indicates that terminal device D has a low UX preference for e5, and a UX preference of the terminal device D indicates that the terminal device D has a low UX preference for e5, for example, a UX parameter corresponding to a UX category to which e5 belongs in the UX preference of the terminal device C is excessively small (for example, 0), and a UX parameter corresponding to the UX category to which e5 belongs in the UX preference of the terminal device D is excessively small (for example, 0), e5 may not be allocated by the terminal device A to the terminal device C, and e6 may not be allocated by the terminal device A to the terminal device D.

Then the terminal devices B, C, D, E, F, and G perform service processing on the respective UX elements received by the terminal devices B, C, D, E, F, and G from the terminal device A.

Refer to FIG. 7B-1 to FIG. 7B-3. When performing service processing on e1, the terminal device B may display the "fireworks video" to the user 1, the user 2, the user 3, and the user 4. When performing service processing on e3 and e4, the terminal device C may display the "playing control components" and the "voting button" to the user 1. When performing service processing on e3 and e4, the terminal device D may display the "playing control components" and the "voting button" to the user 2. When performing service processing on e4, the terminal device E may display the "voting button" to the user 3. When performing service processing on e7, the terminal device F may provide corresponding voice information for the user 1, the user 2, the user 3, and the user 4. When performing service processing on e2, the terminal device G may display the "user comments" to the user 4.

Then, if in a process in which the terminal devices B, C, D, E, F, and G perform service processing on the respective UX elements received by the terminal devices B, C, D, E, F, and G from the terminal device A, and the terminal device A establishes a communication connection to a terminal device H and receives device information from the terminal device H, the terminal device A may implement a process similar to the foregoing process.

For example, if the terminal device H is shared between the user 1 and the user 2, that is, user permission of the terminal device H indicates that the user 1 and the user 2 have permission to access the terminal device H. As shown in FIG. 7C-1 to FIG. 7C-4, for an allocation policy re-determined by the terminal device A, the allocation policy may further indicate that the terminal device H is associated with e3, e4, e5, and e6. The terminal device H may perform service processing on e3, e4, e5, and e6, and display the "play control components", the "voting button", and the "description" to the user 1 and the user 2, so that the terminal devices B, C, D, E, F, G, and H perform distributed processing on e1, e2, e3, e4, e5, e6, and e7.

Then if in a process in which the terminal devices B, C, D, E, F, G, and H perform distributed processing on e1, e2, e3, e4, e5, e6, and e7, the user 1 updates device information of a terminal device X and the terminal device H, and the terminal device A may implement a process similar to the foregoing process.

For example, it is assumed that a UX category to which e3 belongs is E3, a UX category to which e4 belongs is E4, and a UX category to which e5 belongs is E5. If in the terminal device C, the user 1 decreases UX parameters respectively corresponding to E3 and E4, and increases a UX parameter corresponding to E5, that is, decreases preferences of the terminal device C for UX elements belonging to E3 and E4, and increases a preference of the terminal device C for a UX element belonging to E5, the terminal device C may send updated UX preferences to the terminal device A. Correspondingly, if in the terminal device H, the user 1 decreases a UX parameter corresponding to E5, that is, decreases a preference of the terminal device C for the UX element belonging to E5, the terminal device H may send an updated UX preference to the terminal device A. For an allocation policy re-determined by the terminal device A, the allocation policy may indicate that e5 is associated with the terminal device C, and e3, e4, and e6 are associated with the terminal device H. Correspondingly, as shown in FIG. 7D-1 to FIG. 7D-4, the terminal device C may not perform service processing on e3 and e4, but perform service processing on e5 received by the terminal device C from terminal device A, to display the "suggested video" to the user. In addition, the terminal device H may perform service processing on e3, e4, and e5 received by terminal device H from terminal device A, and display the "playing control components", the "voting button", and the "description" to the user, but not display the "suggested video" to the user.

Based on the same concept as the foregoing method embodiment, an embodiment of this application further provides a communication apparatus. The communication apparatus may be a terminal device, or may be a module, a chip, or a system on chip deployed in a terminal device.

As shown in FIG. 8, a communication apparatus 800 may include a processing unit 801 that is configured to obtain UX capability information of at least two terminal devices, where the UX capability information of the terminal device is used to indicate a UX capability corresponding to each of at least one interaction manner supported by the terminal device. The processing unit 801 is further configured to receive a target task request, where the target task request is used to request processing on at least two UX elements, the target task request includes UX requirement information of the at least two UX elements, and the UX requirement information of the UX element is used to indicate a UX capability requirement corresponding to each of at least one interaction manner that supports the UX element in achieving a service objective. The processing unit 801 is further configured to determine, based on the UX capability information of the at least two terminal devices and the UX requirement information of the at least two UX elements, a UX element that needs to be processed by each of the at least two terminal devices, where the UX element that needs to be processed by the terminal device is a UX element in the at least two UX elements. The communication apparatus 800 may include a transceiver unit 802 configured to provide, for each of the at least two terminal devices, the UX element that needs to be processed by each of the at least two terminal devices.

In a possible implementation, the target task request includes user permission of the at least two UX elements, where the user permission of the UX element is used to indicate whether at least one user has permission to interact with the UX element. The processing unit 801 is further configured to obtain user information of the at least two terminal devices, where the user information of the terminal device is used to indicate whether at least one user has permission to access the terminal device. The processing unit 801 is specifically configured to determine, based on the UX capability information and the user information of the at least two terminal devices and the UX capability requirement and the user permission of the at least two UX elements, the UX element that needs to be processed by each of the at least two terminal devices.

In a possible implementation, for any target user having the permission to access the terminal device, the target user has permission to interact with a UX element that needs to be processed by the terminal device.

In a possible implementation, the processing unit 801 is further configured to obtain UX preference information of the at least two terminal devices, where the UX preference information of the terminal device is used to indicate a UX preference corresponding to each of at least one UX category, any UX element belongs to one of the at least one UX category, and the UX preference corresponding to the UX category is used to indicate an expectation degree of a user for using the terminal device to process a UX element belonging to the UX category. The processing unit 801 is specifically configured to determine, based on the UX capability information and UX preference information of the at least two terminal devices and the UX requirement information of the at least two UX elements, the UX element that needs to be processed by each of the at least two terminal devices.

In a possible implementation, the at least two terminal devices include a first terminal device and at least one second terminal device, the at least one second terminal device and the first terminal device establish a communication connection, and the first terminal device includes the communication apparatus. The communication apparatus 800 further includes: a display unit 803, configured to display a UX preference management interface, where the UX preference management interface includes a category identifier of at least one UX category and at least one pattern combination that is in a one-to-one correspondence with the identifier of the at least one UX category. The processing unit 801 is specifically configured to determine UX preference information of the first terminal device based on a service operation performed by the user on the at least one pattern combination. The transceiver unit is further configured to receive UX preference information of the at least one second terminal device from the at least one second terminal device.

In a possible implementation, the target task request includes screen requirement information of the at least two UX elements, where the screen requirement information of the UX element is used to indicate a maximum height, a minimum height, a maximum width, and a minimum width that a user interface UI element of the UX element has when the UI element is displayed on a display screen of a terminal device. The processing unit 801 is further configured to obtain screen information of the at least two terminal devices, where the screen information of the terminal device is used to indicate a height and a width of a display screen of the terminal device. The processing unit 801 is specifically configured to determine, based on the UX capability information and the screen information of the at least two terminal devices and the UX requirement information and the screen requirement information of the at least two UX elements, the UX element that needs to be processed by each of the at least two terminal devices.

In a possible implementation, the processing unit 801 is further configured to determine screen usage information of the at least two UX elements based on the UX capability information of the at least two terminal devices and the UX requirement information of the at least two UX elements, where the screen usage information of the UX element is used to indicate a height and a width that the UI element of the UX element has when the UI element of the UX element is displayed on a display screen of a terminal device used to process the UX element. The transceiver unit is further configured to provide, for each of the at least two terminal devices, screen usage information of the UX element that needs to be processed by each of the at least two terminal devices.

In a possible implementation, the communication apparatus further includes a display unit 803, configured to display an allocation policy confirmation interface, so that the user performs confirmation, where the allocation policy confirmation interface is used to indicate the UX element that needs to be processed by each of the at least two terminal devices.

It should be noted that when the communication apparatus 800 is a terminal, the transceiver unit 802 may be a transceiver, and the transceiver may be a radio frequency circuit. When the communication apparatus 800 includes a memory, the memory is configured to store executable code/an executable instruction. The processing unit 801 and the memory establish a communication connection. The processing unit 801 executes the executable code/instruction stored in the memory, so that the communication apparatus 800 performs the method performed by the terminal device provided in any embodiment of this application. The processing unit 801 may be a general-purpose central processing unit, a microprocessor, or an application specific integrated circuit (application specific integrated circuit, ASIC).

It should be noted that when the communication apparatus 800 is a chip or a chip system deployed in a terminal device, the transceiver unit 802 may be an input/output interface, a pin, a circuit, or the like. When the communication apparatus 800 includes a memory, the memory is configured to store executable code/an executable instruction. The processing unit 801 and the memory establish a communication connection. The processing unit 801 executes the executable code/instruction stored in the memory, so that the chip or chip system deployed in the terminal device performs the method performed by the terminal device provided in any embodiment of this application. The memory may be a storage unit in the chip, for example, a register or a cache. The memory may alternatively be a storage unit outside the chip or chip system that is in the terminal device, such as a read-only memory (read-only memory, ROM), another type of static storage device that can store static information and instructions, or a random access memory (random access memory, RAM).

Based on a same concept as the foregoing method embodiment, an embodiment of this application further provides another communication apparatus. The communication apparatus 900 may be a terminal device.

As shown in FIG. 9, the communication apparatus 900 may include a processor 901 that is configured to obtain UX capability information of at least two terminal devices, where the UX capability information of the terminal device is used to indicate a UX capability corresponding to each of at least one interaction manner supported by the terminal device. The processor 901 is further configured to receive a target task request, where the target task request is used to request processing on at least two UX elements, the target task request includes UX requirement information of the at least two UX elements, and the UX requirement information of the UX element is used to indicate a UX capability requirement corresponding to each of at least one interaction manner that supports the UX element in achieving a service objective. The processor 901 is further configured to determine, based on the UX capability information of the at least two terminal devices and the UX requirement information of the at least two UX elements, a UX element that needs to be processed by each of the at least two terminal devices, where the UX element that needs to be processed by the terminal device is a UX element in the at least two UX elements. The communication apparatus 900 may include a transceiver 902 configured to provide, for each of the at least two terminal devices, the UX element that needs to be processed by each of the at least two terminal devices.

In a possible implementation, the target task request includes user permission of the at least two UX elements, where the user permission of the UX element is used to indicate whether at least one user has permission to interact with the UX element. The processor 901 is further configured to obtain user information of the at least two terminal devices, where the user information of the terminal device is used to indicate whether at least one user has permission to access the terminal device. The processor 901 is specifically configured to determine, based on the UX capability information and the user information of the at least two terminal devices and the UX capability requirement and the user permission of the at least two UX elements, the UX element that needs to be processed by each of the at least two terminal devices. In a possible implementation, for any target user having the permission to access the terminal device, the target user has permission to interact with a UX element that needs to be processed by the terminal device.

In a possible implementation, the processor 901 is further configured to obtain UX preference information of the at least two terminal devices, where the UX preference information of the terminal device is used to indicate a UX preference corresponding to each of at least one UX category, any UX element belongs to one of the at least one UX category, and the UX preference corresponding to the UX category is used to indicate an expectation degree of a user for using the terminal device to process a UX element belonging to the UX category. The processor 901 is specifically configured to determine, based on the UX capability information and UX preference information of the at least two terminal devices and the UX requirement information of the at least two UX elements, the UX element that needs to be processed by each of the at least two terminal devices.

In a possible implementation, the at least two terminal devices include a first terminal device and at least one second terminal device, the at least one second terminal device and the first terminal device establish a communication connection, and the first terminal device includes the communication apparatus. The communication apparatus further includes: a display 903, configured to display a UX preference management interface, where the UX preference management interface includes a category identifier of at least one UX category and at least one pattern combination that is in a one-to-one correspondence with the identifier of the at least one UX category. The processor 901 is specifically configured to determine UX preference information of the first terminal device based on a service operation performed by the user on the at least one pattern combination. The transceiver is further configured to receive UX preference information of the at least one second terminal device from the at least one second terminal device.

In a possible implementation, the target task request includes screen requirement information of the at least two UX elements, where the screen requirement information of the UX element is used to indicate a maximum height, a minimum height, a maximum width, and a minimum width that a user interface UI element of the UX element has when the UI element is displayed on a display screen of a terminal device. The processor 901 is further configured to obtain screen information of the at least two terminal devices, where the screen information of the terminal device is used to indicate a height and a width of a display screen of the terminal device. The processor 901 is specifically configured to determine, based on the UX capability information and the screen information of the at least two terminal devices and the UX requirement information and the screen requirement information of the at least two UX elements, the UX element that needs to be processed by each of the at least two terminal devices.

In a possible implementation, the processor 901 is further configured to determine screen usage information of the at least two UX elements based on the UX capability information of the at least two terminal devices and the UX requirement information of the at least two UX elements, where the screen usage information of the UX element is used to indicate a height and a width that the UI element of the UX element has when the UI element of the UX element is displayed on a display screen of a terminal device used to process the UX element. The transceiver 902 is further configured to provide, for each of the at least two terminal devices, screen usage information of the UX element that needs to be processed by each of the at least two terminal devices.

In a possible implementation, the communication apparatus further includes the display 903, configured to display an allocation policy confirmation interface, so that the user performs confirmation, where the allocation policy confirmation interface is used to indicate the UX element that needs to be processed by each of the at least two terminal devices.

Correspondingly, an embodiment of this application further provides a computer-readable storage medium, configured to store executable code/an executable instruction. When the executable code/instruction is executed by a processor of a terminal device, the terminal device is enabled to implement the method for distributed processing of a UX element provided in any embodiment of this application.

An embodiment of this application further provides a computer program product. The computer program product includes computer program code, and when the computer program code is run on a computer, the computer is enabled to implement the method for distributed processing of a UX element according to any embodiment of this application. An embodiment of this application further provides a terminal device including a memory and a processor. The memory stores executable code/an executable instruction. When the executable code/instruction is executed by the processor, the method for distributed processing of a UX element provided in any embodiment of this application is implemented.

An embodiment of this application further provides a chip system. The chip system includes a processor, configured to invoke a computer program from a memory and run the computer program, so that a terminal device installed with the chip system implements the method for distributed processing of a UX element provided in any embodiment of this application. In a possible design, the chip system may include a chip, or may include a chip and another discrete device.

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It should be understood that sequence numbers of the foregoing processes do not mean execution sequences in various embodiments of this application. The execution sequences of the processes should be determined according to functions and internal logic of the processes, and should not constitute any limitation on the implementation processes of embodiments of this application.

It may be clearly understood by a person skilled in the art that, for the purpose of convenient and brief description, for a detailed working process of the foregoing network device, refer to a corresponding process in the foregoing method embodiments. Details are not described herein again.

It may be understood that the described apparatus embodiments are examples. For example, the module/unit division is merely logical function division, and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application.

It should be noted that the foregoing embodiments are merely intended for describing the technical solutions of this application, but not for limiting this application. Although this application is described in detail with reference to the foregoing embodiments, a person of ordinary skill in the art should understand that they may still make modifications to the technical solutions provided in the foregoing embodiments or make equivalent replacements to some technical features thereof, without departing from the spirit and scope of the technical solutions of embodiments of this application.

**Claims**

1. A method for distributed processing of a user experience UX element, comprising:

   obtaining UX capability information of at least two terminal devices, wherein the UX capability information of the terminal device is used to indicate a UX capability corresponding to each of at least one interaction manner supported by the terminal device;
   receiving a target task request, wherein the target task request is used to request processing on at least two UX elements, the target task request comprises UX requirement information of the at least two UX elements, and the UX requirement information of the UX element is used to indicate a UX capability requirement corresponding to each of at least one interaction manner that supports the UX element in achieving a service objective;
   determining, based on the UX capability information of the at least two terminal devices and the UX requirement information of the at least two UX elements, a UX element that needs to be processed by each of the at least two terminal devices, wherein the UX element that needs to be processed is a UX element in the at least two UX elements; and
   providing, for each of the at least two terminal devices, the UX element that needs to be processed by each of the at least two terminal devices.

2. The method according to claim 1, wherein

   the target task request comprises user permission of the at least two UX elements, wherein the user permission of the UX element is used to indicate whether at least one user has permission to interact with the UX element;
   the method further comprises: obtaining user information of the at least two terminal devices, wherein the user information of the terminal device is used to indicate whether at least one user has permission to access the terminal device; and
   the determining, based on the UX capability information of the at least two terminal devices and the UX requirement information of the at least two UX elements, a UX element that needs to be processed by each of the at least two terminal devices comprises:
   determining, based on the UX capability information and the user information of the at least two terminal devices and the UX capability requirement and the user permission of the at least two UX elements, the UX element that needs to be processed by each of the at least two terminal devices.

3. The method according to claim 2, wherein
   for any target user having the permission to access the terminal device, the target user has permission to interact with the UX element that needs to be processed by the terminal device.

4. The method according to claim 1, wherein

   the method further comprises: obtaining UX preference information of the at least two terminal devices, wherein the UX preference information of the terminal device is used to indicate a UX preference corresponding to each of at least one UX category, any UX element belongs to one of the at least one UX category, and the UX preference corresponding to the UX category is used to indicate an expectation degree of a user for using the terminal device to process a UX element belonging to the UX category; and
   the determining, based on the UX capability information of the at least two terminal devices and the UX requirement information of the at least two UX elements, a UX element that needs to be processed by each of the at least two terminal devices comprises:
   determining, based on the UX capability information and the UX preference information of the at least two terminal devices and the UX requirement information of the at least two UX elements, the UX element that needs to be processed by each of the at least two terminal devices.

5. The method according to claim 4, wherein

the at least two terminal devices comprise a first terminal device and at least one second terminal device, the at least one second terminal device and the first terminal device establish a communication connection, and the method is performed by the first terminal device; and
the obtaining UX preference information of the at least two terminal devices comprises:
receiving UX preference information of the at least one second terminal device from the at least one second terminal device; displaying a UX preference management interface, wherein the UX preference management interface comprises: a category identifier of the at least one UX category and at least one pattern combination that is in a one-to-one correspondence with the identifier of the at least one UX category; and determining UX preference information of the first terminal device based on a service operation performed by the user on the at least one pattern combination.

6. The method according to claim 1, wherein

the target task request comprises screen requirement information of the at least two UX elements, wherein the screen requirement information of the UX element is used to indicate a maximum height, a minimum height, a maximum width, and a minimum width that a user interface UI element of the UX element has when the UI element is displayed on a display screen of a terminal device;
the method further comprises: obtaining screen information of the at least two terminal devices, wherein the screen information of the terminal device is used to indicate a height and a width of a display screen of the terminal device; and
the determining, based on the UX capability information of the at least two terminal devices and the UX requirement information of the at least two UX elements, a UX element that needs to be processed by each of the at least two terminal devices comprises:
determining, based on the UX capability information and the screen information of the at least two terminal devices and the UX requirement information and the screen requirement information of the at least two UX elements, the UX element that needs to be processed by each of the at least two terminal devices.

7. The method according to claim 6, wherein
the method further comprises:

determining screen usage information of the at least two UX elements based on the UX capability information of the at least two terminal devices and the UX requirement information of the at least two UX elements, wherein the screen usage information of the UX element is used to indicate a height and a width that the UI element of the UX element has when the UI element of the UX element is displayed on a display screen of a terminal device used to process the UX element; and
providing, for each of the at least two terminal devices, screen usage information of the UX element that needs to be processed by each of the at least two terminal devices.

8. The method according to any one of claims 1 to 7, wherein
before the providing, for each of the at least two terminal devices, a UX element that needs to be processed by each of the at least two terminal devices, the method further comprises:
displaying an allocation policy confirmation interface, so that a user performs confirmation, wherein the allocation policy confirmation interface is used to indicate the UX element that needs to be processed by each of the at least two terminal devices.

9. A communication apparatus, comprising:

a processing unit, configured to obtain UX capability information of at least two terminal devices, wherein the UX capability information of the terminal device is used to indicate a UX capability corresponding to each of at least one interaction manner supported by the terminal device;
the processing unit, further configured to receive a target task request, wherein the target task request is used to request processing on at least two UX elements, the target task request comprises UX requirement information of the at least two UX elements, and the UX requirement information of the UX element is used to indicate a UX capability requirement corresponding to each of at least one interaction manner that supports the UX element in achieving a service objective; and
the processing unit, further configured to determine, based on the UX capability information of the at least two terminal devices and the UX requirement information of the at least two UX elements, a UX element that needs to be processed by each of the at least two terminal devices, wherein the UX element that needs to be processed is a UX element in the at least two UX elements; and
a transceiver unit, configured to provide, for each of the at least two terminal devices, the UX element that needs to be processed by each of the at least two terminal devices.

10. The communication apparatus according to claim 9, wherein

the target task request comprises user permission of the at least two UX elements, wherein the user permission of the UX element is used to indicate whether at least one user has permission to interact with the UX element; the processing unit is further configured to obtain user information of the at least two terminal devices, wherein the user information of the terminal device is used to indicate whether at least one user has permission to access the terminal device; and
the processing unit is specifically configured to determine, based on the UX capability information and the user information of the at least two terminal devices and the UX capability requirement and the user permission of the at least two UX elements, the UX element that needs to be processed by each of the at least two terminal devices.

11. The communication apparatus according to claim 10, wherein
for any target user having the permission to access the terminal device, the target user has permission to interact with the UX element that needs to be processed by the terminal device.

12. The communication apparatus according to claim 9, wherein

the processing unit is further configured to obtain UX preference information of the at least two terminal devices, wherein the UX preference information of the terminal device is used to indicate a UX preference corresponding to each of at least one UX category, any UX element belongs to one of the at least one UX category, and the UX preference corresponding to the UX category is used to indicate an expectation degree of a user for using the terminal device to process a UX element belonging to the UX category; and
the processing unit is specifically configured to determine, based on the UX capability information and the UX preference information of the at least two terminal devices and the UX requirement information of the at least two UX elements, the UX element that needs to be processed by each of the at least two terminal devices.

13. The communication apparatus according to claim 12, wherein

the at least two terminal devices comprise a first terminal device and at least one second terminal device, the at least one second terminal device and the first terminal device establish a communication connection, and the first terminal device comprises the communication apparatus; and
the communication apparatus further comprises: a display unit, configured to display a UX preference management interface, wherein the UX preference management interface comprises a category identifier of at least one UX category and at least one pattern combination that is in a one-to-one correspondence with the identifier of the at least one UX category;
the processing unit is specifically configured to determine UX preference information of the first terminal device based on a service operation performed by the user on the at least one pattern combination; and
the transceiver unit is further configured to receive UX preference information of the at least one second terminal device from the at least one second terminal device.

14. The communication apparatus according to claim 9, wherein

the target task request comprises screen requirement information of the at least two UX elements, wherein the screen requirement information of the UX element is used to indicate a maximum height, a minimum height, a maximum width, and a minimum width that a user interface UI element of the UX element has when the UI element is displayed on a display screen of a terminal device;
the processing unit is further configured to obtain screen information of the at least two terminal devices, wherein the screen information of the terminal device is used to indicate a height and a width of a display screen of the terminal device; and

the processing unit is specifically configured to determine, based on the UX capability information and the screen information of the at least two terminal devices and the UX requirement information and the screen requirement information of the at least two UX elements, the UX element that needs to be processed by each of the at least two terminal devices.

15. The communication apparatus according to claim 14, wherein

the processing unit is further configured to determine screen usage information of the at least two UX elements based on the UX capability information of the at least two terminal devices and the UX requirement information of the at least two UX elements, wherein the screen usage information of the UX element is used to indicate a height and a width that the UI element of the UX element has when the UI element of the UX element is displayed on a display screen of a terminal device used to process the UX element; and
the transceiver unit is further configured to provide, for each of the at least two terminal devices, screen usage information of the UX element that needs to be processed by each of the at least two terminal devices.

16. The communication apparatus according to any one of claims 9 to 15, wherein
the communication apparatus further comprises a display unit, configured to display an allocation policy confirmation interface, so that the user performs confirmation, wherein the allocation policy confirmation interface is used to indicate the UX element that needs to be processed by each of the at least two terminal devices.

17. A computer-readable storage medium, configured to store executable code/an executable instruction, wherein when the executable code/instruction is executed by a processor of a terminal device, the terminal device is enabled to implement the method according to any one of claims 1 to 8.

18. A terminal device, comprising a memory and a processor, wherein the memory stores executable code/an executable instruction, and when executing the executable code/instruction, the processor implements the method according to any one of claims 1 to 8.

19. A chip system, comprising: a processor, configured to: invoke a computer program from a memory and run the computer program, so that a terminal device installed with the chip system implements the method according to any one of claims 1 to 8.

20. A computer program product comprising executable code/an executable instruction, wherein when the computer program product runs on a terminal device, the terminal device implements the method according to any one of claims 1 to 8.

Terminal device 100

| Speaker [150A] | Receiver [150B] | Microphone [150C] |
|---|---|---|

| Communication module 130 | Audio module [150] |
|---|---|

| Internal memory [120] | Processor [110] | Sensor module [160] |
|---|---|---|
| | | Touch sensor [160A] |

| Display screen [140] | Camera [180] | Button [170] |
|---|---|---|

FIG. 1

FIG. 2

FIG. 3

First terminal
device

Second terminal
device

401. Obtain device information of the first
terminal device

402. Receive device information of the second terminal device

403. Receive a target task request

404. Determine an allocation policy

405. Display an allocation policy
confirmation interface

406. Send, to the second terminal device, a UX element
that needs to be processed by the second terminal device

407. The first terminal device and the second terminal device perform service
processing on respective UX elements that need to be processed by the first terminal
device and the second terminal device

FIG. 4

E1 ——————————◆ 19

E2 ——————————◆—— 16

E3 ————◆———————— 6

E4 —————◆————————— 8

E5 ———————◆—————— 10

E6 ◆——————————— 2

Confirm

FIG. 5A

E1 ◆——————————— 2

E2 ——————————◆—— 16

E3 ————◆———————— 6

E4 —————◆————————— 8

E5 ———————◆—————— 10

E6 ——————————◆ 19

Confirm

FIG. 5B

FIG. 6

P1

P2

P3

P4

P6

**Comments**

Add a public comment                     Submit

Roman Rädle
This is a pubic comment with a potentially
very long message which might cause a line
here and there and maybe it will be
rendered a bit different

Bob Ross
Comment added from the iPhone

Alice Liddel
Where an I?

DarrylI
I love Big Buck Bunny <3

Caroline
Hey Darryl, me too

**Suggestions**

City                          Clouds

Figurines                     Fireworks                    P5

Island                        Sunrise

Vote on the Next Video

2                    0

Description
Lorem ipsum dolor sit amet, consectetur
adipiscing elit. Integer nec odio. Praesent
libero, Sed cursus ante dapibus diam, Sed
nisi. Nulla quis sem at nibh

FIG. 7A

B ← e1

E ← e4

F ← e7

Vote on the Next Video

2    0

~
TO
FIG. 7B-2

FIG. 7B-1

EP 4 116 823 A1

CONT.
FROM
FIG. 7B-1
~

C ← e3&e4

D ← e3&e4

Vote on the Next Video

Vote on the Next Video

~
TO
FIG. 7B-3

FIG. 7B-2

G ◄————— e2

## Comments

| Add a public comment | Submit |

**Roman Rädle**
This is a pubic comment with a potentially very long message which might cause a line here and there and maybe it will be rendered a bit different

**Bob Ross**
Comment added from the iPhone

**Alice Liddel**
Where an I?

**DarrylI**
I love Big Buck Bunny <3

**Caroline**
Hey Darryl, me too

CONT.
FROM
FIG. 7B-2

FIG. 7B-3

B — e1

E — e4

Vote on the Next Video

F — e7

~
TO
FIG. 7C-2

FIG. 7C-1

CONT.
FROM
FIG. 7C-1
~

C ←—— e3&e4            D ←—— e3&e4

Vote on the Next Video

Vote on the Next Video

~
TO
FIG. 7C-3

FIG. 7C-2

G ← e2

**Comments**

Add a public comment | Submit

**Roman Rädle**
This is a pubic comment with a potentially very long message which might cause a line here and there and maybe it will be rendered a bit different

**Bob Ross**
Comment added from the iPhone

**Alice Liddel**
Where an I?

**DarrylI**
I love Big Buck Bunny <3

**Caroline**
Hey Darryl, me too

CONT. FROM FIG. 7C-2

TO FIG. 7C-4

FIG. 7C-3

H ⟵ e3&e4&e5&e6

CONT. FROM FIG. 7C-3

FIG. 7C-4

F → e7

e4

E

Vote on the Next Video

0

2

B → e1

~
TO
FIG. 7D-2

FIG. 7D-1

CONT.
FROM
FIG. 7D-1

C ← e5          D ← e3&e4

Suggestions

City

Clouds

Figurines

Fireworks

Island

Sunrise

Vote on the Next Video

2      0

TO
FIG. 7D-3

FIG. 7D-2

G ←— e2

## Comments

Add a public comment | Submit

**Roman Rädle**
This is a pubic comment with a potentially very long message which might cause a line here and there and maybe it will be rendered a bit different

**Bob Ross**
Comment added from the iPhone

**Alice Liddel**
Where an I?

**DarrylI**
I love Big Buck Bunny <3

**Caroline**
Hey Darryl, me too

CONT. FROM FIG. 7D-2

TO FIG. 7D-4

FIG. 7D-3

H ←——— e3&e4&e6

CONT.
FROM
FIG. 7D-3 ∼

Vote on the Next Video

**Description**
Lorem ipsum dolor sit amet, consectetur
adipiscing elit. Integer nec odio.
Praesent libero, Sed cursus ante dapibus
diam, Sed nisi. Nulla quis sem at nibh

FIG. 7D-4

FIG. 8

FIG. 9

## INTERNATIONAL SEARCH REPORT

| International application No. |
| --- |
| **PCT/CN2021/079054** |

**A.    CLASSIFICATION OF SUBJECT MATTER**

G06F 9/451(2018.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI: 用户体验, 元素, 分布式, 任务, 事务, 处理, 分发, 分配, 设备, 终端, 能力, 需求, 量化, user experience, UX, element, distribute, mission, transaction, deal, allocate, equipment, terminal, capability, need, requirement, quantizing, quantization

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 111459592 A (HUAWEI TECHNOLOGIES CO., LTD.) 28 July 2020 (2020-07-28) entire document | 1-20 |
| A | CN 109803003 A (HUAWEI TECHNOLOGIES CO., LTD.) 24 May 2019 (2019-05-24) description, paragraphs 4-74 | 1-20 |
| A | CN 109753207 A (TENCENT TECHNOLOGY SHENZHEN CO., LTD.) 14 May 2019 (2019-05-14) description, paragraphs [0003]-[0016] | 1-20 |
| A | CN 108390775 A (CENTRAL SOUTH UNIVERSITY) 10 August 2018 (2018-08-10) entire document | 1-20 |
| A | US 2009288004 A1 (STRANDELL, T. P. et al.) 19 November 2009 (2009-11-19) entire document | 1-20 |

☐ Further documents are listed in the continuation of Box C.          ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **01 June 2021** | **09 June 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/079054**

| Patent document cited in search report | | | Publication date (day/month/year) | Patent family member(s) | | | Publication date (day/month/year) |
|---|---|---|---|---|---|---|---|
| CN | 111459592 | A | 28 July 2020 | None | | | |
| CN | 109803003 | A | 24 May 2019 | None | | | |
| CN | 109753207 | A | 14 May 2019 | None | | | |
| CN | 108390775 | A | 10 August 2018 | None | | | |
| US | 2009288004 | A1 | 19 November 2009 | WO | 2009138552 | A1 | 19 November 2009 |

Form PCT/ISA/210 (patent family annex) (January 2015)

**REFERENCES CITED IN THE DESCRIPTION**

**Patent documents cited in the description**

- CN 202010245395